# EUROPEAN PATENT APPLICATION

(11) **EP 4 597 437 A1**
(43) Date of publication of application: **06.08.2025**
(21) Application number: 23872254.0
(22) Date of filing: 25.09.2023
(51) Int. Cl.: G06T 19/00, A63F 13/75, A63F 13/79, G06F 3/01, G06F 3/048

(54) **PROGRAM AND INFORMATION PROCESSING SYSTEM**

(30) Priority: 26.09.2022 JP 2022152557; 26.09.2022 JP 2022152560; 26.09.2022 JP 2022152564
(71) Applicant: COLOPL, INC., Tokyo 107-0052 (JP)
(72) Inventor: KAJIYAMA, Mayuko, Tokyo 107-0052 (JP); INOMATA, Atsushi, Tokyo 107-0052 (JP); YAMAGIWA, Masashi, Tokyo 107-0052 (JP); KODA, Ryusuke, Tokyo 107-0052 (JP)
(74) Representative: Gille Hrabal Partnerschaftsgesellschaft mbB Patentanwälte
(86) International application number: PCT/JP2023/034710
(87) International publication number: WO 2024/071031

(57) **Abstract**

A program for causing a computer to function as a setting reflection unit which changes, for a virtual space which allows a character corresponding to a user to appear, an identifiability of a first character for a user operating a second character without changing the identifiability of the first character for a user operating a character other than the second character, based on predetermined setting which is performed for the second character by a user operating the first character.

## Description

### TECHNICAL FIELD

The present invention relates to a program and an information processing system.

### BACKGROUND ART

Conventionally, a service (for example, a game or the like) that allows interaction with other users in a virtual space is known (see, for example, Patent Document 1).

### Prior Art Document

### Patent document

Patent Document 1: Japanese Patent Application Publication No. 2021-114036

### SUMMARY OF INVENTION

### TECHNICAL PROBLEM

In such a service, it has been demanded to provide the user with the virtual space that has a reduced possibility of the user feeling displeasure.

The present invention has been devised in view of the above described circumstances, and aims to provide the user with the virtual space that has a reduced possibility of the user feeling displeasure.

### SOLUTION TO PROBLEM

According to an aspect of an embodiment illustrated in the present disclosure, there is provided a program which causes a computer to function as a setting reflection unit which changes, for a virtual space which allows a character corresponding to a user to appear, an identifiability of a first character for a user operating a second character without changing the identifiability of the first character for a user operating a character other than the second character, based on predetermined setting which is performed for the second character by a user operating the first character.

According to an aspect of an embodiment illustrated in the present disclosure, there is provided a program which causes a computer to function as a setting reflection unit which causes, for a virtual space which allows a character corresponding to a user to appear, at least one dummy character, which is a dummy of a first character, to appear in the virtual space, based on predetermined setting which is performed for a second character by a user operating the first character.

According to an aspect of an embodiment illustrated in the present disclosure, there is provided a program which causes a computer to function as: a sensing unit which is capable of sensing, in a virtual space which allows a character corresponding to each of a plurality of users to appear, a behavior, which is regarded as a nuisance behavior, of a character; and a specific control execution unit which executes specific control based on sensing of the behavior regarded as the nuisance behavior.

### ADVANTAGEOUS EFFECTS OF INVENTION

The present invention makes it possible to provide the user with the virtual space that has a reduced possibility of the user feeling displeasure.

### BRIEF DESCRIPTION OF THE DRAWINGS

Fig. 1 is a diagram illustrating a schematic configuration of an HMD system according to an embodiment.
Fig. 2 is a block diagram illustrating an example of a hardware configuration of a computer according to an embodiment.
Fig. 3 is a diagram conceptually illustrating a uvw visual field coordinate system set in an HMD according to an embodiment.
Fig. 4 is a diagram conceptually illustrating an aspect of expressing a virtual space according to an embodiment.
Fig. 5 is a diagram illustrating a head of a user wearing an HMD according to an embodiment from above.
Fig. 6 is a diagram illustrating a YZ cross section of a field-of-view region in the virtual space as viewed from an X direction.
Fig. 7 is a diagram illustrating an XZ cross section of the field-of-view region in the virtual space as viewed from a Y direction.
Fig. 8A is a diagram illustrating a schematic configuration of a controller according to an embodiment.
Fig. 8B is a diagram illustrating an example of each direction of yaw, roll, and pitch defined with respect to a right hand of the user according to an embodiment.
Fig. 9 is a block diagram illustrating an example of a hardware configuration of a server according to an embodiment.
Fig. 10 is a block diagram illustrating, as a module configuration, the computer according to an embodiment.
Fig. 11 is a sequence chart illustrating processing executed in an HMD set according to an embodiment.
Fig. 12A is a schematic diagram illustrating a situation in which each HMD provides the virtual space to the user in a network.
Fig. 12B is a diagram illustrating a field-of-view image of a user 5A in Fig. 12A.
Fig. 13 is a sequence chart illustrating processing executed in the HMD system according to an embodiment.
Fig. 14 is a block diagram illustrating a detailed configuration of modules of the computer according to an embodiment.
Fig. 15 is a block diagram illustrating, as a module configuration, the server according to an embodiment.
Fig. 16 is a flowchart illustrating display change processing executed in the HMD system according to an embodiment.
Fig. 17A is a diagram illustrating an example of an appearance and a handle of an avatar object according to an embodiment, which illustrates a state before predetermined setting is performed.
Fig. 17B is a diagram illustrating an example of an appearance and a handle of an avatar object according to an embodiment, which illustrates a state after the predetermined setting is performed.
Fig. 18 is a flowchart illustrating dummy arrangement processing executed in the HMD system according to an embodiment.
Fig. 19 is a schematic diagram illustrating a virtual space when the dummy arrangement processing is executed in the HMD system according to an embodiment.
Fig. 20 is a flowchart illustrating nuisance behavior determination processing (part 1) executed in the HMD system according to an embodiment.
Fig. 21 is a flowchart illustrating the nuisance behavior determination processing (part 2) executed in the HMD system according to an embodiment.
Fig. 22 is a flowchart illustrating the nuisance behavior determination processing (part 3) executed in the HMD system according to an embodiment.
Fig. 23 is a flowchart illustrating the nuisance behavior determination processing (part 4) executed in the HMD system according to an embodiment.
Fig. 24 is a flowchart illustrating the nuisance behavior determination processing (part 5) executed in the HMD system according to an embodiment.

### DESCRIPTION OF EXEMPLARY EMBODIMENTS

Hereinafter, embodiments of this technical idea will be described in detail with reference to the drawings. In following description, same components are denoted by same reference numerals. Names and functions thereof are same. Therefore, detailed descriptions thereof will not be repeated. In one or more embodiments shown in the present disclosure, the elements included in the embodiments can be combined with each other, and the combined result also forms a part of the embodiments shown in the present disclosure.

### (Configuration of HMD system)

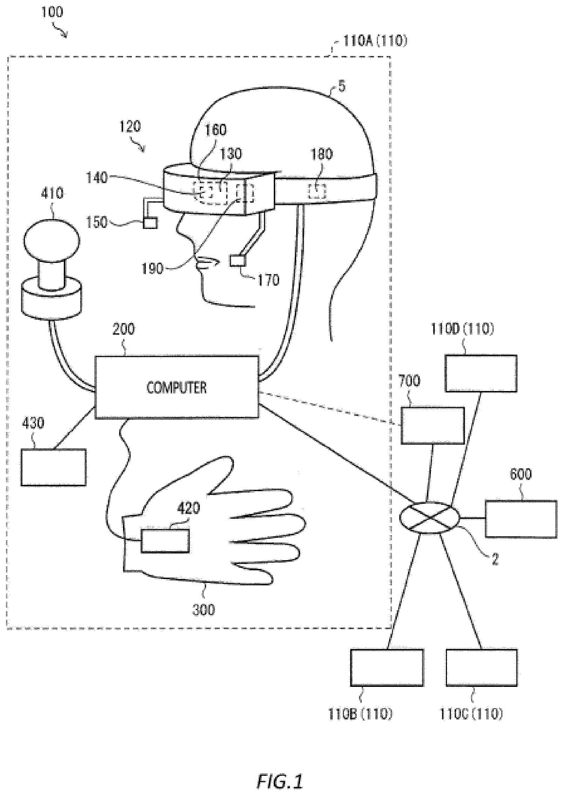

A configuration of a head-mounted device (HMD) system 100 will be described with reference to Fig. 1. Fig. 1 is a diagram illustrating a schematic configuration of the HMD system 100 according to the present embodiment. The HMD system 100 is provided as a home system or a business system. The HMD system 100 provides a predetermined service to a user.

The HMD system 100 includes a server 600, HMD sets 110A, 110B, 110C, and 110D, an external device 700, and a network 2. Each of the HMD sets 110A, 110B, 110C, and 110D is configured to be able to communicate with the server 600 and the external device 700 via the network 2. Hereinafter, the HMD sets 110A, 110B, 110C, and 110D are also collectively referred to as HMD sets 110. A number of the HMD sets 110 constituting the HMD system 100 is not limited to four, and may be three or less or five or more. The HMD set 110 includes an HMD 120, a computer 200, an HMD sensor 410, a display 430, and a controller 300. The HMD 120 includes a monitor 130, a gaze sensor 140, a first camera 150, a second camera 160, a microphone 170, and a speaker 180. The controller 300 may include a motion sensor 420.

In an aspect, the computer 200 can be connected to an Internet or another network 2, and can communicate with the server 600 or another computer connected to the network 2. Examples of the another computer include a computer of another HMD set 110 and the external device 700, for example. In another aspect, the HMD 120 may include a sensor 190 instead of the HMD sensor 410.

The HMD 120 can be worn on a head of a user 5 and provide a virtual space to the user 5 during operation. More specifically, the HMD 120 displays each of an image for a right eye and an image for a left eye on the monitor 130. When the eyes of the user 5 visually recognize respective images, the user 5 can recognize the images as a three-dimensional image based on a parallax of both eyes. The HMD 120 may include either a so-called head mounted display including a monitor or a head mounted device on which a smartphone or another terminal having a monitor is mountable.

The monitor 130 is implemented as a non-transmissive display apparatus, for example. In an aspect, the monitor 130 is arranged on a main body of the HMD 120 so as to be located in front of both eyes of the user 5. Therefore, when the user 5 visually recognizes the three-dimensional image displayed on the monitor 130, the user 5 can be immersed in the virtual space. In an aspect, the virtual space includes, for example, a background, an object operable by the user 5, and an image of a menu selectable by the user 5. In an aspect, the monitor 130 may be implemented as a liquid crystal monitor or an organic electro luminescence (EL) monitor which is included in a so-called smartphone or another information display terminal.

In another aspect, the monitor 130 may be implemented as a transmissive display apparatus. Examples of the transmissive monitor 130 include a glass type monitor and a contact lens type monitor. The HMD 120 may not be a sealed type that covers the eyes of the user 5 as illustrated in Fig. 1, but may be an open type that does not cover the eyes of the user 5. The transmissive monitor 130 may be configurable as a temporarily non-transmissive display apparatus by adjusting its transmittance. The monitor 130 may include a configuration in which a part of an image forming the virtual space and a real space are simultaneously displayed. For example, the monitor 130 may display an image of the real space captured by a camera mounted to the HMD 120, or may set the transmittance to be partially high such that the real space is visible.

In an aspect, the monitor 130 may include a sub monitor which displays the image for the right eye and a sub monitor which displays the image for the left eye. In another aspect, the monitor 130 may be configured to integrally display the image for the right eye and the image for the left eye. In this case, the monitor 130 includes a high speed shutter. The high speed shutter operates such that the image for the right eye and the image for the left eye are alternately displayed so that the image is recognized by only either one of the eyes.

In an aspect, the HMD 120 includes a plurality of light sources (not illustrated). Each of the light sources is implemented, for example, by a light emitting diode (LED) which emits infrared rays. The HMD sensor 410 has a position tracking function for detecting a motion of the HMD 120. More specifically, the HMD sensor 410 reads a plurality of infrared rays emitted by the HMD 120, and detects a position and an inclination of the HMD 120 in the real space.

In another aspect, the HMD sensor 410 may be implemented by a camera. In this case, the HMD sensor 410 can detect the position and the inclination of the HMD 120 by executing image analysis processing using image information of the HMD 120 which is output from the camera.

In another aspect, the HMD 120 may include the sensor 190 as a position detector instead of the HMD sensor 410 or in addition to the HMD sensor 410. The HMD 120 can detect its own position and the inclination of the HMD 120 by using the sensor 190. For example, when the sensor 190 is an angular velocity sensor, a geomagnetic sensor, or an acceleration sensor, the HMD 120 can detect its own position and inclination by using any of these sensors instead of the HMD sensor 410. As an example, when the sensor 190 is the angular velocity sensor, the angular velocity sensor detects an angular velocity around three axes of the HMD 120 in the real space over time. The HMD 120 calculates a temporal change in angle around the three axes of the HMD 120 based on each angular velocity, and further calculates the inclination of the HMD 120 based on the temporal change in angle.

The gaze sensor 140 detects a direction in which a line-of-sight of each of the right eye and the left eye of the user 5 is directed. That is, the gaze sensor 140 detects the line-of-sight of the user 5. A detection of the direction of the line-of-sight is implemented, for example, by a well-known eye tracking function. The gaze sensor 140 is implemented by a sensor having the eye tracking function. In an aspect, the gaze sensor 140 preferably includes a sensor for the right eye and a sensor for the left eye. The gaze sensor 140 may be, for example, a sensor that detects a rotation angle of each eyeball by irradiating the right eye and the left eye of the user 5 with infrared light and receiving reflected light from a cornea and an iris with respect to the irradiation light. The gaze sensor 140 can sense the line-of-sight of the user 5 based on each detected rotation angle.

The first camera 150 images a lower portion of a face of the user 5. More specifically, the first camera 150 images a nose, a mouth, or the like of the user 5. The second camera 160 images eyes, eyebrows, or the like of the user 5. A housing of the HMD 120 on a side of the user 5 is defined as an inside of the HMD 120, and a housing of the HMD 120 on a side opposite to the user 5 is defined as an outside of the HMD 120. In an aspect, the first camera 150 may be arranged outside the HMD 120, and the second camera 160 may be arranged inside the HMD 120. Images generated by the first camera 150 and the second camera 160 are input to the computer 200. In another aspect, the first camera 150 and the second camera 160 may be implemented as one camera, and the face of the user 5 may be imaged by the one camera.

The microphone 170 converts an utterance of the user 5 into an audio signal (electrical signal) and outputs the audio signal to the computer 200. The speaker 180 converts an audio signal into audio and outputs the audio to the user 5. In another aspect, the HMD 120 may include an earphone instead of the speaker 180.

The controller 300 is connected to the computer 200 in a wired or wireless manner. The controller 300 receives an input of a command from the user 5 to the computer 200. In an aspect, the controller 300 is configured to be graspable by the user 5. In another aspect, the controller 300 is configured to be mountable on a body or a part of clothes of the user 5. In still another aspect, the controller 300 may be configured to output at least one of vibration, sound, or light based on a signal transmitted from the computer 200. In still another aspect, the controller 300 receives, from the user 5, an operation for controlling a position and a motion of the object arranged in the virtual space.

In an aspect, the controller 300 includes a plurality of light sources. Each of the light sources is implemented, for example, by an LED which emits infrared rays. The HMD sensor 410 has a position tracking function. In this case, the HMD sensor 410 reads a plurality of infrared rays emitted by the controller 300, and detects a position and an inclination of the controller 300 in the real space. In another aspect, the HMD sensor 410 may be implemented by a camera. In this case, the HMD sensor 410 can detect the position and the inclination of the controller 300 by executing image analysis processing using image information of the controller 300 which is output from the camera.

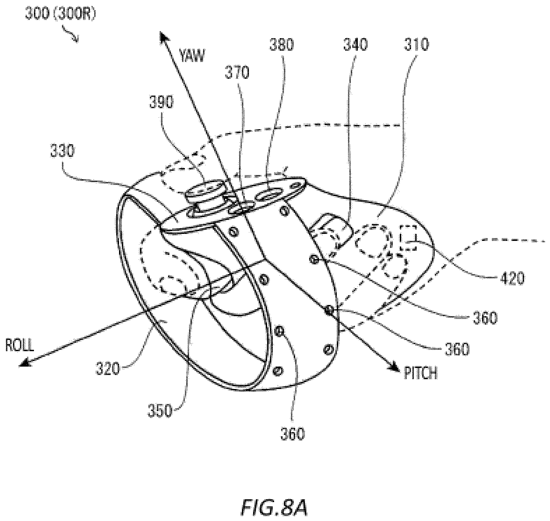

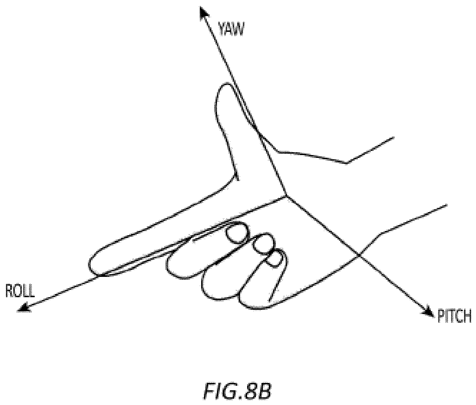

In an aspect, the motion sensor 420 is attached to a hand of the user 5 and detects a motion of the hand of the user 5. Being attached to the hand of the user 5 means that, for example, the motion sensor 420 is provided in the controller 300 configured to be graspable by the user 5. An example of the grasp-type controller 300 will be described later with reference to Fig. 8. Furthermore, the motion sensor 420 may be provided in a glove-type device (in other words, the glove-type controller 300) configured to be wearable by the user 5. In the case of the glove-type controller 300, it is less likely to fly away as compared with the grasp-type controller 300, so that it is possible to ensure safety in the real space. The motion sensor 420 detects, for example, a rotation speed of the hand, a number of rotations, a motion of a finger, or the like. The detected signal is sent to the computer 200. Note that the glove-type controller 300 may be configured to be able to detect motions of a larger number of fingers (for example, all fingers) as compared with the grasp-type controller 300. In another aspect, a sensor not worn by the user 5 may detect the motion of the hand of the user 5. For example, a signal of a camera that images the user 5 may be input to the computer 200 as a signal representing the action of the user 5. As an example, the motion sensor 420 and the computer 200 are wirelessly connected to each other. In a case of wireless connection, a communication form is not particularly limited, and for example, BLUETOOTH (registered trademark) or another well-known communication method is used.

The display 430 displays an image similar to an image displayed on the monitor 130. Accordingly, a user other than the user 5 wearing the HMD 120 can be also allowed to view an image similar to as that of the user 5. The image displayed on the display 430 does not necessarily need to be a three-dimensional image, and may be the image for the right eye or the image for the left eye. Examples of the display 430 include a liquid crystal display, an organic EL monitor, and the like, for example.

The server 600 may transmit a program to the computer 200. In another aspect, the server 600 may communicate with another computer 200 for providing virtual reality to the HMD 120 used by another user. For example, when a plurality of users play a participatory game in an amusement facility, each computer 200 communicates a signal based on the action of each user with another computer 200 via the server 600, and enables the plurality of users to enjoy a common game in a same virtual space. Each computer 200 may communicate the signal based on the action of each user with another computer 200 without passing through the server 600.

The external device 700 may be any device as long as the device can communicate with the computer 200. For example, the external device 700 may be a device capable of communicating with the computer 200 via the network 2 or may be a device capable of directly communicating with the computer 200 by short-range wireless communication or wired connection. Furthermore, the external device 700 may be, for example, a device capable of communicating with the server 600 via the network 2. Examples of the external device 700 include, but are not limited to, a smart device, a personal computer (PC), and a peripheral device of the computer 200, for example.

### (Hardware configuration of computer)

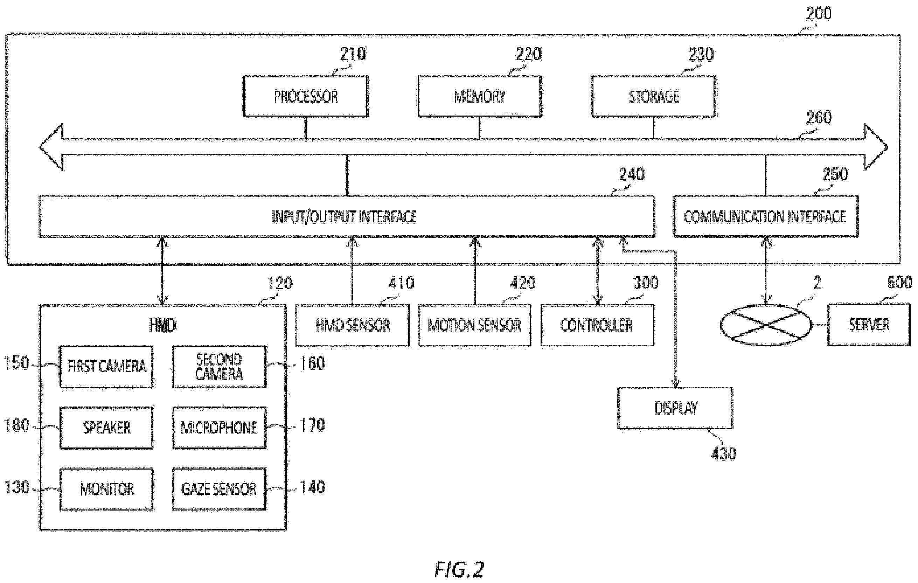

The computer 200 according to the present embodiment will be described with reference to Fig. 2. Fig. 2 is a block diagram illustrating an example of a hardware configuration of the computer 200 according to the present embodiment. The computer 200 includes a processor 210, a memory 220, a storage 230, an input/output interface 240, and a communication interface 250 as main components. Each component is connected to a bus 260.

The processor 210 executes a series of commands included in a program stored in the memory 220 or the storage 230, based on the signal provided to the computer 200 or based on satisfaction of a predetermined condition. In an aspect, the processor 210 is implemented as a central processing unit (CPU), a graphics processing unit (GPU), a micro processor unit (MPU), a field-programmable gate array (FPGA), or another device.

The memory 220 temporarily stores a program and data. The program is loaded from the storage 230, for example. The data includes data input to the computer 200 and data generated by the processor 210. In an aspect, the memory 220 is implemented as a random access memory (RAM) or another volatile memory.

The storage 230 permanently holds a program and data. The storage 230 is implemented as, for example, a read-only memory (ROM), a hard disk device, a flash memory, or another non-volatile storage device. The program stored in the storage 230 includes a program for providing a virtual space in the HMD system 100, a simulation program, a game program, a user authentication program, and a program for implementing communication with another computer 200. The data stored in the storage 230 includes data, objects, or the like for defining the virtual space.

In another aspect, the storage 230 may be implemented as a detachable storage device such as a memory card. In still another aspect, a configuration using a program and data stored in an external storage device may be used instead of the storage 230 built in the computer 200. According to such a configuration, for example, in a scene where a plurality of HMD systems 100 are used, such as in an amusement facility, it is possible to update programs and data in bulk.

The input/output interface 240 communicates signals with the HMD 120, the HMD sensor 410, the motion sensor 420, and the display 430. The monitor 130, the gaze sensor 140, the first camera 150, the second camera 160, the microphone 170, and the speaker 180 included in the HMD 120 can communicate with the computer 200 via the input/output interface 240 of the HMD 120. In an aspect, the input/output interface 240 is implemented by using a universal serial bus (USB), a digital visual interface (DVI), a high-definition multimedia interface (HDMI (registered trademark)), or another terminal. The input/output interface 240 is not limited to the above.

In an aspect, the input/output interface 240 may further communicate with the controller 300. For example, the input/output interface 240 receives inputs of signals output from the controller 300 and the motion sensor 420. In another aspect, the input/output interface 240 transmits a command output from the processor 210 to the controller 300. The command instructs the controller 300 to execute vibration, audio output, light emission, or the like. When receiving the command, the controller 300 executes any of vibration, audio output, and light emission according to the command.

The communication interface 250 is connected to the network 2 and communicates with another computer (for example, the server 600) connected to the network 2. In an aspect, the communication interface 250 is implemented as, for example, a local area network (LAN) or another wired communication interface, or WI-FI (registered trademark), BLUETOOTH (registered trademark), near field communication (NFC), or another wireless communication interface. The communication interface 250 is not limited to the above.

In an aspect, the processor 210 accesses the storage 230, loads one or more programs stored in the storage 230 into the memory 220, and executes a series of commands included in the program. The one or more programs may include an operating system of the computer 200, an application program for providing a virtual space, game software executable in the virtual space, or the like. The processor 210 sends a signal for providing the virtual space to the HMD 120 via the input/output interface 240. The HMD 120 displays a video on the monitor 130, based on the signal.

In the example illustrated in Fig. 2, a configuration is illustrated in which the computer 200 is provided outside the HMD 120, but in another aspect, the computer 200 may be built in the HMD 120. As an example, a portable information communication terminal (for example, a smartphone) including the monitor 130 may function as the computer 200.

The computer 200 may be configured to be used in common by a plurality of HMDs 120. According to such a configuration, for example, a same virtual space can be provided to a plurality of users, so that each user can enjoy a same application as that of another user in the same virtual space.

In an embodiment, in the HMD system 100, a real coordinate system that is a coordinate system in a real space is set in advance. The real coordinate system has three reference directions (axes) respectively parallel to a vertical direction in a real space, a horizontal direction orthogonal to the vertical direction, and a front-rear direction orthogonal to both the vertical direction and the horizontal direction. The horizontal direction, the vertical direction (up-down direction), and the front-rear direction in the real coordinate system are defined as an x axis, a y axis, and a z axis, respectively. More specifically, in the real coordinate system, the x axis is parallel to the horizontal direction of the real space. The y axis is parallel to the vertical direction of the real space. The z axis is parallel to the front-rear direction of the real space.

In an aspect, the HMD sensor 410 includes an infrared sensor. When the infrared sensor detects an infrared ray emitted from each light source of the HMD 120, presence of the HMD 120 is detected. The HMD sensor 410 further detects a position and an inclination (orientation) of the HMD 120 in the real space according to the motion of the user 5 wearing the HMD 120, based on a value of each point (each coordinate value in the real coordinate system). More specifically, the HMD sensor 410 can detect a temporal change in the position and the inclination of the HMD 120 by using each value detected over time.

Each inclination of the HMD 120 detected by the HMD sensor 410 is equivalent to each inclination around the three axes of the HMD 120 in the real coordinate system. The HMD sensor 410 sets a uvw visual field coordinate system in the HMD 120, based on the inclination of the HMD 120 in the real coordinate system. The uvw visual field coordinate system set in the HMD 120 corresponds to a viewpoint coordinate system when the user 5 wearing the HMD 120 views a subject in the virtual space.

### (uvw visual field coordinate system)

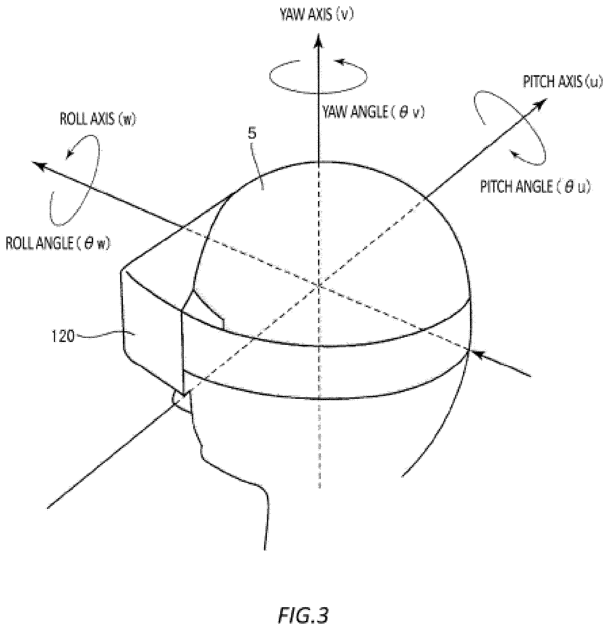

The uvw visual field coordinate system will be described with reference to Fig. 3. Fig. 3 is a diagram conceptually illustrating the uvw visual field coordinate system set in the HMD 120 according to an embodiment. The HMD sensor 410 detects the position and the inclination of the HMD 120 in the real coordinate system when the HMD 120 is activated. The processor 210 sets the uvw visual field coordinate system in the HMD 120 based on the detected value.

As illustrated in Fig. 3, the HMD 120 sets a three-dimensional uvw visual field coordinate system with the head of the user 5 wearing the HMD 120 as a center (origin). More specifically, the HMD 120 sets three directions newly obtained by inclining the horizontal direction, the vertical direction, and the front-rear direction (x axis, y axis, and z axis) defining the real coordinate system around each axis by the inclination around each axis of the HMD 120 in the real coordinate system, as a pitch axis (u axis), a yaw axis (v axis), and a roll axis (w axis) of the uvw visual field coordinate system in the HMD 120.

In an aspect, when the user 5 wearing the HMD 120 is standing upright and visually recognizing a front, the processor 210 sets the uvw visual field coordinate system parallel to the real coordinate system in the HMD 120. In this case, the horizontal direction (x axis), the vertical direction (y axis), and the front-rear direction (z axis) in the real coordinate system coincide with the pitch axis (u axis), the yaw axis (v axis), and the roll axis (w axis) in the uvw visual field coordinate system in the HMD 120.

After the uvw visual field coordinate system is set in the HMD 120, the HMD sensor 410 can detect the inclination of the HMD 120 in the set uvw visual field coordinate system, based on the motion of the HMD 120. In this case, the HMD sensor 410 detects, as the inclination of the HMD 120, each of a pitch angle (θu), a yaw angle (θv), and a roll angle (θw) of the HMD 120 in the uvw visual field coordinate system. The pitch angle (θu) represents an inclination angle of the HMD 120 around the pitch axis in the uvw visual field coordinate system. The yaw angle (θv) represents an inclination angle of the HMD 120 around the yaw axis in the uvw visual field coordinate system. The roll angle (θw) represents an inclination angle of the HMD 120 around the roll axis in the uvw visual field coordinate system.

The HMD sensor 410 sets, in the HMD 120, the uvw visual field coordinate system in the HMD 120 after the motion of the HMD 120, based on the detected inclination of the HMD 120. A relationship between the HMD 120 and the uvw visual field coordinate system of the HMD 120 is always constant regardless of the position and the inclination of the HMD 120. When the position and the inclination of the HMD 120 change, in conjunction with changes in the position and the inclination, the position and the inclination of the uvw visual field coordinate system of the HMD 120 in the real coordinate system change.

In an aspect, the HMD sensor 410 may specify, as a relative position with respect to the HMD sensor 410, the position of the HMD 120 in the real space, based on a light intensity of the infrared ray acquired based on an output from the infrared sensor and a relative positional relationship between a plurality of points (for example, a distance between the points or the like). The processor 210 may decide the origin of the uvw visual field coordinate system of the HMD 120 in the real space (real coordinate system) based on the specified relative position.

### (Virtual space)

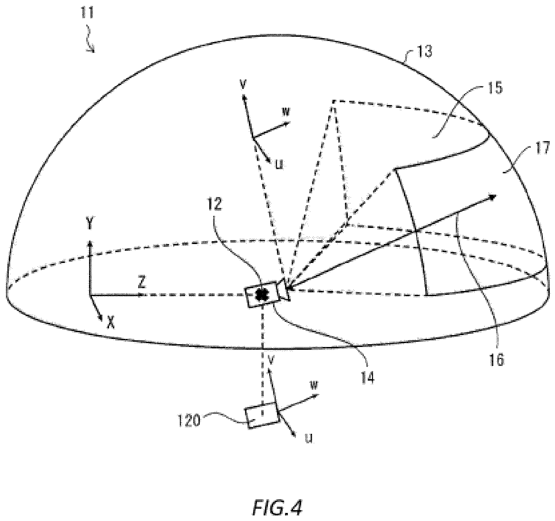

The virtual space will be further described with reference to Fig. 4. Fig. 4 is a diagram conceptually illustrating an aspect of expressing a virtual space 11 according to an embodiment. The virtual space 11 has an omnidirectional spherical structure that covers an entire 360-degree direction around a center 12. In Fig. 4, an upper half of a sphere of the virtual space 11 is illustrated in order to prevent a complicated description. In the virtual space 11, each mesh is defined. A position of each mesh is defined in advance as a coordinate value in an XYZ coordinate system which is a global coordinate system defined in the virtual space 11. The computer 200 associates each partial image forming a panorama image 13 (a still image, a moving image, or the like), which can be deployed in the virtual space 11, with each corresponding mesh in the virtual space 11.

In an aspect, in the virtual space 11, the XYZ coordinate system is defined with the center 12 as an origin. The XYZ coordinate system is, for example, parallel to the real coordinate system. A horizontal direction, a vertical direction (up-down direction), and a front-rear direction in the XYZ coordinate system are defined as an X axis, a Y axis, and a Z axis, respectively. Therefore, the X axis (horizontal direction) of the XYZ coordinate system is parallel to the x axis of the real coordinate system, the Y axis (vertical direction) of the XYZ coordinate system is parallel to the y axis of the real coordinate system, and the Z axis (front-rear direction) of the XYZ coordinate system is parallel to the z axis of the real coordinate system.

At a time of activation of the HMD 120, that is, in an initial state of the HMD 120, a virtual camera 14 is arranged at the center 12 of the virtual space 11. In an aspect, the processor 210 causes the monitor 130 of the HMD 120 to display an image captured by the virtual camera 14. In the virtual space 11 in conjunction with the motion of the HMD 120 in the real space, the virtual camera 14 similarly moves. Accordingly, the changes in the position and inclination of the HMD 120 in the real space can be similarly reproduced in the virtual space 11.

In the virtual camera 14, the uvw visual field coordinate system is defined similarly to a case of the HMD 120. The uvw visual field coordinate system of the virtual camera 14 in the virtual space 11 is defined in conjunction with the uvw visual field coordinate system of the HMD 120 in the real space (real coordinate system). Therefore, when the inclination of the HMD 120 changes, the inclination of the virtual camera 14 also changes accordingly. The virtual camera 14 can also move in the virtual space 11 in conjunction with the movement of the user 5 wearing the HMD 120 in the real space.

The processor 210 of the computer 200 defines a field-of-view region 15 in the virtual space 11, based on a position and an inclination (reference line-of-sight 16) of the virtual camera 14. The field-of-view region 15 corresponds to a region, which is visually recognized by the user 5 wearing the HMD 120, in the virtual space 11. That is, the position of the virtual camera 14 can be said to be a viewpoint of the user 5 in the virtual space 11.

The line-of-sight of the user 5 detected by the gaze sensor 140 is a direction in the viewpoint coordinate system when the user 5 visually recognizes the subject. The uvw visual field coordinate system of the HMD 120 is equal to the viewpoint coordinate system when the user 5 visually recognizes the monitor 130. The uvw visual field coordinate system of the virtual camera 14 is in conjunction with the uvw visual field coordinate system of the HMD 120. Therefore, the HMD system 100 according to an aspect can regard the line-of-sight of the user 5 detected by the gaze sensor 140 as the line-of-sight of the user 5 in the uvw visual field coordinate system of the virtual camera 14.

### (Line-of-sight of user)

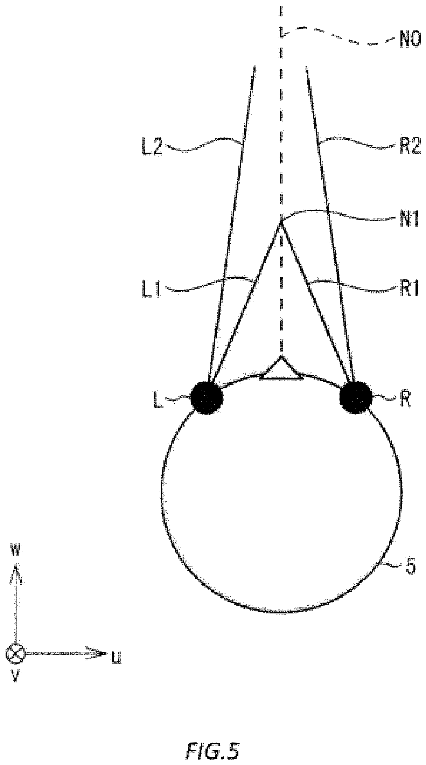

Decision of the line-of-sight of the user 5 will be described with reference to Fig. 5. Fig. 5 is a diagram illustrating the head of the user 5 wearing the HMD 120 according to an embodiment from above.

In an aspect, the gaze sensor 140 detects the line-of-sight of each of the right eye and the left eye of the user 5. In an aspect, when the user 5 is looking nearby, the gaze sensor 140 detects lines of sight R1 and L1. In another aspect, when the user 5 is looking far, the gaze sensor 140 detects lines of sight R2 and L2. In this case, an angle formed by the lines of sight R2 and L2 with respect to the roll axis w is smaller than an angle formed by the lines of sight R1 and L1 with respect to the roll axis w. The gaze sensor 140 transmits a detection result to the computer 200.

When receiving, from the gaze sensor 140, detection values of the lines of sight R1 and L1 as the detection result of the line-of-sight, the computer 200 specifies a gaze point N1, which is an intersection of the lines of sight R1 and L1, based on the detection values. On the other hand, when receiving detection values of the lines of sight R2 and L2 from the gaze sensor 140, the computer 200 specifies an intersection of the lines of sight R2 and L2 as a gaze point. The computer 200 specifies a line-of-sight N0 of the user 5 based on a position of the specified gaze point N1. For example, the computer 200 detects, as the line-of-sight N0, a direction in which a straight line, which passes through a midpoint of a straight line connecting a right eye R and a left eye L of the user 5 and the gaze point N1, extends. The line-of-sight N0 is a direction in which the user 5 is actually directing his/her lines of sight with both eyes. The line-of-sight N0 is equivalent to a direction in which the user 5 is actually directing his/her line-of-sight with respect to the field-of-view region 15.

In another aspect, the HMD system 100 may include a television broadcast receiving tuner. According to such a configuration, the HMD system 100 can display a television program in the virtual space 11.

In still another aspect, the HMD system 100 may include a communication circuit for connection to the Internet or a call function for connection to a telephone line.

### (Field-of-view region)

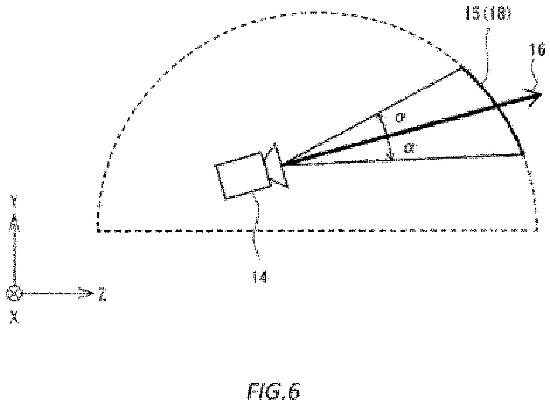

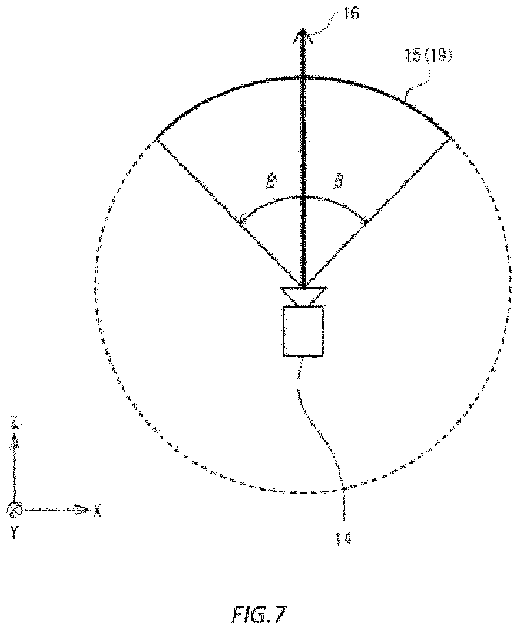

The field-of-view region 15 will be described with reference to Figs. 6 and 7. Fig. 6 is a diagram illustrating a YZ cross section of the field-of-view region 15 in the virtual space 11 as viewed from an X direction. Fig. 7 is a diagram illustrating an XZ cross section of the field-of-view region 15 in the virtual space 11 as viewed from a Y direction.

As illustrated in Fig. 6, the field-of-view region 15 in the YZ cross section includes a region 18. The region 18 is defined by the position of the virtual camera 14, the reference line-of-sight 16, and the YZ cross section of the virtual space 11. The processor 210 defines a range including a polar angle α around the reference line-of-sight 16 in the virtual space as the region 18.

As illustrated in Fig. 7, the field-of-view region 15 in the XZ cross section includes a region 19. The region 19 is defined by the position of the virtual camera 14, the reference line-of-sight 16, and the XZ cross section of the virtual space 11. The processor 210 defines a range including an azimuth angle β around the reference line-of-sight 16 in the virtual space 11 as the region 19. The polar angle α and the azimuth angle β are determined according to the position of the virtual camera 14 and the inclination (orientation) of the virtual camera 14.

In an aspect, the HMD system 100 provides the user 5 with a field-of-view in the virtual space 11 by causing the monitor 130 to display a field-of-view image 17 based on a signal from the computer 200. The field-of-view image 17 is an image equivalent to a portion of the panorama image 13 corresponding to the field-of-view region 15. When the user 5 moves the HMD 120 worn on his/her head, the virtual camera 14 also moves in conjunction with the motion. As a result, a position of the field-of-view region 15 in the virtual space 11 changes. Accordingly, the field-of-view image 17 displayed on the monitor 130 is updated to an image superimposed on the field-of-view region 15, in the panorama image 13, in a direction the user 5 faces in the virtual space 11. The user 5 can visually recognize a desired direction in the virtual space 11.

As described above, the inclination of the virtual camera 14 is equivalent to the line-of-sight (reference line-of-sight 16) of the user 5 in the virtual space 11, and a position where the virtual camera 14 is arranged is equivalent to the viewpoint of the user 5 in the virtual space 11. Therefore, by changing the position or the inclination of the virtual camera 14, the image displayed on the monitor 130 is updated, and the field-of-view of the user 5 is moved.

While wearing the HMD 120, the user 5 can visually recognize only the panorama image 13 deployed in the virtual space 11 without visually recognizing a real world. Therefore, the HMD system 100 can give the user 5 a high sense of immersion in the virtual space 11.

In an aspect, the processor 210 can move the virtual camera 14 in the virtual space 11 in conjunction with the movement of the user 5 wearing the HMD 120 in the real space. In this case, the processor 210 specifies an image region (field-of-view region 15) to be projected on the monitor 130 of the HMD 120, based on the position and the inclination of the virtual camera 14 in the virtual space 11.

In an aspect, the virtual camera 14 may include two virtual cameras, that is, a virtual camera for providing the image for the right eye and a virtual camera for providing the image for the left eye. An appropriate parallax is set for the two virtual cameras such that the user 5 can recognize the three-dimensional virtual space 11. In another aspect, the virtual camera 14 may be implemented by one virtual camera. In this case, the image for the right eye and the image for the left eye may be generated from an image obtained by the one virtual camera. In the present embodiment, a technical idea according to the present disclosure will be exemplified as a configuration in which the virtual camera 14 includes two virtual cameras, and a roll axis (w) generated by combining roll axes of the two virtual cameras is adapted to a roll axis (w) of the HMD 120.

### (Controller)

An example of the controller 300 will be described with reference to Fig. 8. Fig. 8 is a diagram illustrating a schematic configuration of the controller 300 according to an embodiment.

As illustrated in Fig. 8, in an aspect, the controller 300 may include a right controller 300R and a left controller (not illustrated). The right controller 300R is operated by a right hand of the user 5. The left controller is operated by a left hand of the user 5. In an aspect, the right controller 300R and the left controller are symmetrically configured as separate apparatuses. Therefore, the user 5 can freely move each of the right hand grasping the right controller 300R and the left hand grasping the left controller. In another aspect, the controller 300 may be an integrated controller that receives operations of both hands. The right controller 300R will be described below.

The right controller 300R includes a grip 310, a frame 320, and a top surface 330. The grip 310 is configured to be grasped by the right hand of the user 5. For example, the grip 310 may be held by a palm and three fingers (a middle finger, a ring finger, a little finger) of the right hand of the user 5.

The grip 310 includes buttons 340 and 350 and the motion sensor 420. The button 340 is arranged on a side surface of the grip 310 and receives an operation from the middle finger of the right hand. The button 350 is arranged on a front surface of the grip 310, and receives an operation from an index finger of the right hand. In an aspect, the buttons 340 and 350 are configured as trigger type buttons. The motion sensor 420 is built in a housing of the grip 310. When the action of the user 5 can be detected from around the user 5 by a camera or another apparatus, the grip 310 may not include the motion sensor 420.

The frame 320 includes a plurality of infrared LEDs 360 arranged along a circumferential direction thereof. While executing a program using the controller 300, the infrared LED 360 emits an infrared ray in accordance with a progress of the program. The infrared ray emitted from the infrared LED 360 can be used to detect a position and a posture (an inclination, an orientation) of each of the right controller 300R and the left controller. In the example illustrated in Fig. 8, the infrared LEDs 360 arranged in two rows are illustrated, but a number of arrays is not limited to that illustrated in Fig. 8. A single row or arrays of three or more rows may be used.

The top surface 330 includes buttons 370 and 380 and an analog stick 390. The buttons 370 and 380 are configured as push buttons. The buttons 370 and 380 receives an operation from a thumb of the right hand of the user 5. In an aspect, the analog stick 390 receives an operation in any direction up to 360 degrees from an initial position (neutral position). The operation includes, for example, an operation for moving an object arranged in the virtual space 11.

In an aspect, the right controller 300R and the left controller include a battery for driving the infrared LED 360 and another member. The battery includes, but is not limited to, a rechargeable battery, a button battery, and the like. In another aspect, the right controller 300R and the left controller can be connected to, for example, a USB interface of the computer 200. In this case, the right controller 300R and the left controller do not require a battery.

As illustrated in a state (A) and a state (B) of Fig. 8, for example, respective directions of yaw, roll, and pitch are defined for the right hand of the user 5. When the user 5 stretches his/her thumb and index finger, a direction in which the thumb stretches is defined as a yaw direction, a direction in which the index finger stretches is defined as a roll direction, and a direction perpendicular to a plane defined by an axis of the yaw direction and an axis of the roll direction is defined as a pitch direction.

### (Hardware configuration of server)

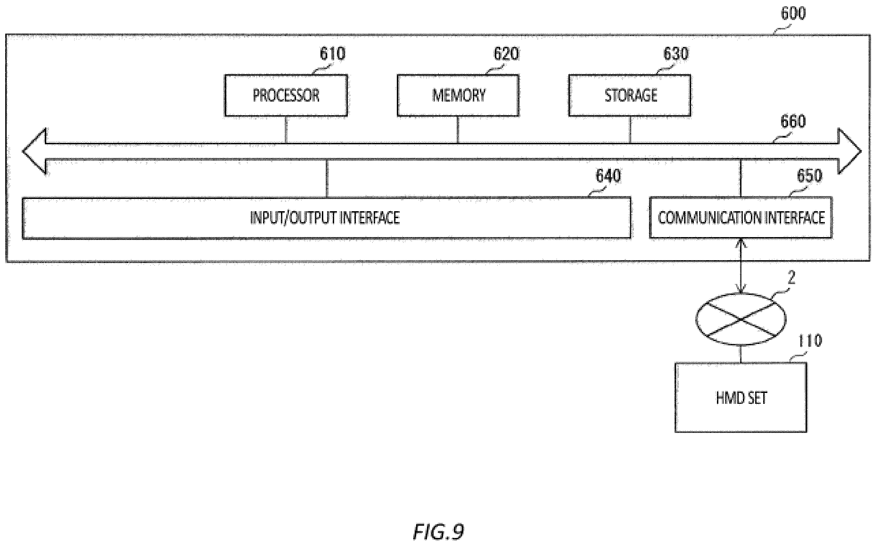

The server 600 according to the present embodiment will be described with reference to Fig. 9. Fig. 9 is a block diagram illustrating an example of a hardware configuration of the server 600 according to an embodiment. The server 600 includes a processor 610, a memory 620, a storage 630, an input/output interface 640, and a communication interface 650 as main components. Each component is connected to the bus 660.

The processor 610 executes a series of commands included in a program stored in the memory 620 or the storage 630, based on the signal provided to the server 600 or based on satisfaction of a predetermined condition. In an aspect, the processor 610 is implemented as a CPU, a GPU, an MPU, an FPGA, or another device.

The memory 620 temporarily stores a program and data. The program is loaded from the storage 630, for example. The data includes data input to the server 600 and data generated by the processor 610. In an aspect, the memory 620 is implemented as a RAM or another volatile memory.

The storage 630 permanently holds a program and data. The storage 630 is implemented as, for example, a ROM, a hard disk device, a flash memory, or another non-volatile storage device. The program stored in the storage 630 may include a program for providing a virtual space in the HMD system 100, a simulation program, a game program, a user authentication program, and a program for implementing communication with the computer 200. The data stored in the storage 630 may include data, objects, or the like for defining the virtual space.

In another aspect, the storage 630 may be implemented as a detachable storage device such as a memory card. In still another aspect, a configuration using a program and data stored in an external storage device may be used instead of the storage 630 built in the server 600. According to such a configuration, for example, in a scene where a plurality of HMD systems 100 is used, such as in an amusement facility, it is possible to update programs and data in bulk.

The input/output interface 640 communicates a signal with an input/output device. In an aspect, the input/output interface 640 is implemented by using a USB, a DVI, a HDMI (registered trademark), or another terminal. The input/output interface 640 is not limited to the above.

The communication interface 650 is connected to the network 2 and communicates with the computer 200 connected to the network 2. In an aspect, the communication interface 650 is implemented as, for example, a LAN or another wired communication interface, or WI-FI, BLUETOOTH, NFC, or another wireless communication interface. The communication interface 650 is not limited to the above.

In an aspect, the processor 610 accesses the storage 630, loads one or more programs stored in the storage 630 into the memory 620, and executes a series of commands included in the program. The one or more programs may include an operating system of the server 600, an application program for providing a virtual space, game software executable in the virtual space, or the like. The processor 610 may send a signal for providing the virtual space to the computer 200 via the input/output interface 640.

### (HMD control apparatus)

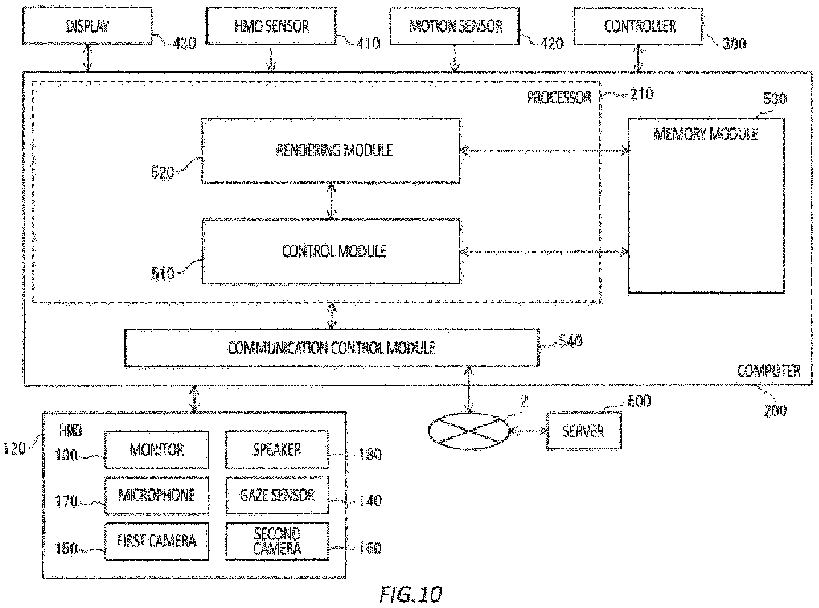

A control apparatus of the HMD 120 will be described with reference to Fig. 10. In an embodiment, the control apparatus is implemented by the computer 200 having a known configuration. Fig. 10 is a block diagram illustrating, as a module configuration, the computer 200 according to an embodiment.

As illustrated in Fig. 10, the computer 200 includes a control module 510, a rendering module 520, a memory module 530, and a communication control module 540. In an aspect, the control module 510 and the rendering module 520 are implemented by the processor 210. In another aspect, a plurality of processors 210 may operate as the control module 510 and the rendering module 520. The memory module 530 is implemented by the memory 220 or the storage 230. The communication control module 540 is implemented by the communication interface 250.

The control module 510 controls the virtual space 11 provided to the user 5. The control module 510 defines the virtual space 11 in the HMD system 100 by using virtual space data representing the virtual space 11. The virtual space data is stored in the memory module 530, for example. The control module 510 may generate the virtual space data or acquire the virtual space data from the server 600 or the like.

The control module 510 arranges an object in the virtual space 11 by using object data representing the object. The object data is stored in the memory module 530, for example. The control module 510 may generate the object data or acquire the object data from the server 600 or the like. The object may include, for example, an avatar object that is a virtual self of the user 5 (in other words, a character object of the user 5), a character object, an operation object such as a virtual hand operated by the controller 300, a landscape including a forest, a mountain, or the like arranged according to a progress of a game story, a town, an animal, or the like.

The control module 510 arranges, in the virtual space 11, the avatar object of the user 5 of another computer 200 connected via the network 2. In an aspect, the control module 510 arranges the avatar object of the user 5 in the virtual space 11. In an aspect, the control module 510 arranges, in the virtual space 11, an avatar object imitating the user 5 based on an image including the user 5. In another aspect, the control module 510 arranges, in the virtual space 11, an avatar object that is selected by the user 5 from among a plurality of types of avatar objects (for example, an object imitating an animal or a deformed human object).

The control module 510 specifies the inclination of the HMD 120 based on an output of the HMD sensor 410. In another aspect, the control module 510 specifies the inclination of the HMD 120 based on an output of the sensor 190 functioning as a motion sensor. The control module 510 detects features (for example, a mouth, an eye, and an eyebrow) forming a face of the user 5 from images of the face of the user 5 generated by the first camera 150 and the second camera 160. The control module 510 detects a motion (shape) of each detected feature.

The control module 510 detects the line-of-sight of the user 5 in the virtual space 11, based on a signal from the gaze sensor 140. The control module 510 detects a viewpoint position (a coordinate value in the XYZ coordinate system) at which the detected line-of-sight of the user 5 intersects the sphere of the virtual space 11. More specifically, the control module 510 detects the viewpoint position based on the line-of-sight of the user 5 defined in the uvw coordinate system and the position and the inclination of the virtual camera 14. The control module 510 transmits the detected viewpoint position to the server 600. In another aspect, the control module 510 may be configured to transmit line-of-sight information representing the line-of-sight of the user 5 to the server 600. In such a case, the viewpoint position can be calculated based on the line-of-sight information received by the server 600.

The control module 510 reflects the motion of the HMD 120 detected by the HMD sensor 410 on the avatar object. For example, the control module 510 senses that the HMD 120 is inclined and arranges the avatar object to be inclined. The control module 510 reflects the detected motion of the facial feature on a face of the avatar object arranged in the virtual space 11. The control module 510 receives the line-of-sight information of another user 5 from the server 600, and reflects the line-of-sight information on the line-of-sight of the avatar object of the another user 5. In an aspect, the control module 510 reflects the motion of the controller 300 on the avatar object or the operation object. In this case, the controller 300 may include a motion sensor, an acceleration sensor, a plurality of light emitting elements (for example, infrared LEDs), or the like for sensing the motion of the controller 300. Furthermore, the motion of the controller 300 may be a motion of the analog stick 390, motions of the buttons 370 and 380, or the like. Then, the control module 510 may cause the avatar object to perform movement or the like in the virtual space 11, based on the motion of the analog stick 390 (in other words, the operation of the user on the analog stick 390), for example.

The control module 510 arranges, in the virtual space 11, an operation object for receiving the operation of the user 5 in the virtual space 11. The user 5 operates the operation object to operate an object arranged in the virtual space 11, for example. In an aspect, the operation object may include, for example, a hand object that is a virtual hand equivalent to the hand of the user 5, or the like. In an aspect, the control module 510 moves the hand object in the virtual space 11 in conjunction with the motion of the hand of the user 5 in the real space, based on the output of the motion sensor 420. In an aspect, the operation object may be equivalent to a hand portion of the avatar object.

When each of objects arranged in the virtual space 11 collides with another object, the control module 510 detects the collision. The control module 510 can detect, for example, a timing at which a collision area of a certain object and a collision area of another object are touched, and performs predetermined processing when the detection is performed. The control module 510 can detect a timing at which objects are separated from a state of being in contact, and performs predetermined processing when the detection is performed. The control module 510 can detect that objects are in contact with each other. For example, when the operation object and another object come into contact with each other, the control module 510 detects that the operation object and the another object comes into contact with each other and performs predetermined processing.

In an aspect, the control module 510 controls image display on the monitor 130 of the HMD 120. For example, the control module 510 arranges the virtual camera 14 in the virtual space 11. The control module 510 controls the position of the virtual camera 14 in the virtual space 11 and the inclination (orientation) of the virtual camera 14. The control module 510 defines the field-of-view region 15 according to an inclination of the head of the user 5 wearing the HMD 120 and the position of the virtual camera 14. The rendering module 520 generates the field-of-view image 17 to be displayed on the monitor 130, based on the decided field-of-view region 15. The field-of-view image 17 generated by the rendering module 520 is output to the HMD 120 by the communication control module 540.

When detecting the utterance of the user 5 using the microphone 170 from the HMD 120, the control module 510 specifies the computer 200 to which audio data corresponding to the utterance is to be transmitted. The audio data is transmitted to the computer 200 specified by the control module 510. When receiving the audio data from the computer 200 of another user via the network 2, the control module 510 outputs audio (utterance) corresponding to the audio data from the speaker 180.

The memory module 530 holds data used by the computer 200 to provide the virtual space 11 to the user 5. In an aspect, the memory module 530 holds spatial information, object information, and user information.

The spatial information holds one or more templates defined for providing the virtual space 11.

The object information includes a plurality of panorama images 13 forming the virtual space 11 and object data for arranging an object in the virtual space 11. The panorama image 13 may include a still image and a moving image. The panorama image 13 may include an image of a non-real space and an image of the real space. Examples of the image of the non-real space include an image generated by computer graphics, for example.

The user information holds a user ID for identifying the user 5. The user ID may be, for example, an Internet protocol (IP) address or a media access control (MAC) address set in the computer 200 used by the user. In another aspect, the user ID may be set by the user. The user information includes a program or the like for causing the computer 200 to function as a control apparatus of the HMD system 100. Furthermore, the user information includes information managed for each account (in other words, for each user ID) of the service.

Data and a program stored in the memory module 530 are input by the user 5 of the HMD 120. Alternatively, the processor 210 downloads a program or data from a computer (for example, the server 600) operated by a provider of the content, and stores the downloaded program or data in the memory module 530.

The communication control module 540 can communicate with the server 600 or another information communication apparatus via the network 2.

In an aspect, the control module 510 and the rendering module 520 may be implemented by using, for example, UNITY (registered trademark) provided by Unity Technologies. In another aspect, the control module 510 and the rendering module 520 can also be implemented as a combination of circuit elements that implement each processing.

Processing in the computer 200 is implemented by hardware and software executed by the processor 210. Such software may be stored in advance in a hard disk or another memory module 530. The software may be stored in a CD-ROM or another computer-readable non-volatile data recording medium and distributed as a program product. Alternatively, the software may be provided as a program product that can be downloaded by an information provider connected to the Internet or another network. Such software is read from the data recording medium by an optical disk drive apparatus or another data reading apparatus, or downloaded from the server 600 or another computer via the communication control module 540, and then temporarily stored in the memory module 530. The software is read from the memory module 530 by the processor 210 and stored in a form of an executable program in the RAM. The processor 210 executes the program.

### (Control structure of HMD system)

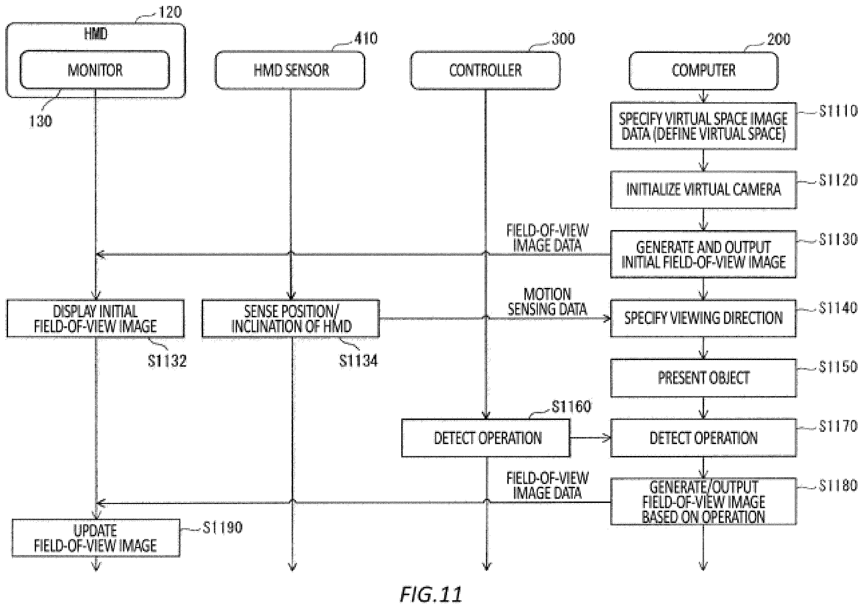

A control structure of the HMD set 110 will be described with reference to Fig. 11. Fig. 11 is a sequence chart illustrating a part of processing executed in the HMD set 110 according to an embodiment.

As illustrated in Fig. 11, in step S1110, the processor 210 of the computer 200, operating as the control module 510, specifies virtual space data and defines the virtual space 11.

In step S1120, the processor 210 initializes the virtual camera 14. For example, the processor 210 arranges the virtual camera 14 at the center 12 defined in advance in the virtual space 11 in a work region of the memory, and directs a line-of-sight of the virtual camera 14 in a direction in which the user 5 is facing.

In step S1130, the processor 210, operating as the rendering module 520, generates field-of-view image data for displaying an initial field-of-view image. The generated field-of-view image data is output to the HMD 120 by the communication control module 540.

In step S1132, the monitor 130 of the HMD 120 displays the field-of-view image based on the field-of-view image data received from the computer 200. The user 5 wearing the HMD 120 can recognize the virtual space 11 when visually recognizing the field-of-view image.

In step S1134, the HMD sensor 410 senses a position and an inclination of the HMD 120 based on a plurality of infrared rays emitted from the HMD 120. A sensing result is output to the computer 200 as motion sensing data.

In step S1140, the processor 210 specifies a viewing direction of the user 5 wearing the HMD 120 based on the position and the inclination included in the motion sensing data of the HMD 120.

In step S1150, the processor 210 executes an application program and arranges an object in the virtual space 11 based on a command included in the application program.

In step S1160, the controller 300 detects an operation of the user 5 and outputs, to the computer 200, detection data representing the detected operation. In another aspect, the operation by the user 5 may be detected based on an image from a camera arranged around the user 5.

In step S1170, the processor 210 detects an operation of the controller 300 by the user 5 based on the detection data acquired from the controller 300.

In step S1180, the processor 210 generates field-of-view image data based on the operation of the controller 300 by the user 5. The generated field-of-view image data is output to the HMD 120 by the communication control module 540.

In step S1190, the HMD 120 updates the field-of-view image based on the received field-of-view image data, and displays the updated field-of-view image on the monitor 130.

### (Avatar object)

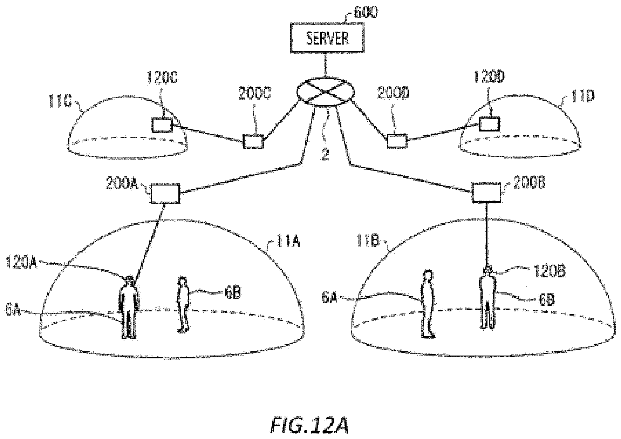

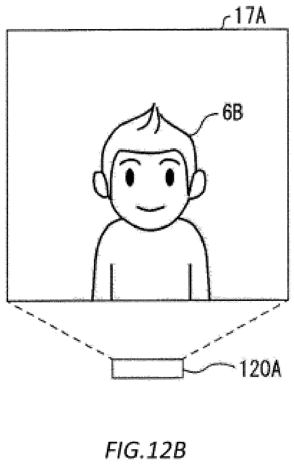

The avatar object according to the present embodiment will be described with reference to Figs. 12A and 12B. Hereinafter, the avatar object of the user 5 of each of the HMD sets 110A and 110B will be described. Hereinafter, the user of the HMD set 110A is referred to as a user 5A, the user of the HMD set 110B is referred to as a user 5B, the user of the HMD set 110C is referred to as a user 5C, and the user of the HMD set 110D is referred to as a user 5D. A reference numeral of each component related to the HMD set 110A is denoted by A, a reference numeral of each component related to the HMD set 110B is denoted by B, a reference numeral of each component related to the HMD set 110C is denoted by C, and a reference numeral of each component related to the HMD set 110D is denoted by D. For example, an HMD 120A is included in the HMD set 110A.

Fig. 12A is a schematic diagram illustrating a situation in which each HMD 120 provides the virtual space 11 to the user 5 in the network 2. Computers 200A to 200D provide virtual spaces 11A to 11D to the users 5A to 5D via HMDs 120A to 120D, respectively. In the example illustrated in Fig. 12A, the virtual space 11A and the virtual space 11B are configured by same data. In other words, the computer 200A and the computer 200B share a same virtual space. In the virtual space 11A and the virtual space 11B, an avatar object 6A of the user 5A and an avatar object 6B of the user 5B exist. The avatar object 6A in the virtual space 11A and the avatar object 6B in the virtual space 11B are each wearing the HMD 120, but this is for easy understanding of description, and actually, these objects are not wearing the HMD 120.

In an aspect, a processor 210A can arrange a virtual camera 14A, which captures a field-of-view image 17A of the user 5A, at a position of eyes of the avatar object 6A.

Fig. 12B is a view illustrating the field-of-view image 17A of the user 5A in Fig. 12A. The field-of-view image 17A is an image displayed on a monitor 130A of the HMD 120A. The field-of-view image 17A is an image generated by the virtual camera 14A. The avatar object 6B of the user 5B is displayed on the field-of-view image 17A. Although not particularly illustrated, the avatar object 6A of the user 5A is similarly displayed in a field-of-view image of the user 5B.

In the state of Fig. 12B, the user 5A can attempt communication by a dialogue with the user 5B via the virtual space 11A. More specifically, the audio of the user 5A acquired by a microphone 170A is transmitted to an HMD 120B of the user 5B via the server 600, and is output from a speaker 180B provided in the HMD 120B. The audio of the user 5B is transmitted to the HMD 120A of the user 5A via the server 600, and is output from a speaker 180A provided in the HMD 120A.

An action of the user 5B (a motion of the HMD 120B and a motion of a controller 300B) is reflected on the avatar object 6B arranged in the virtual space 11A by the processor 210A. Accordingly, the avatar object 6B which is operated by the user 5B to be moved is visually recognized by the user 5A.

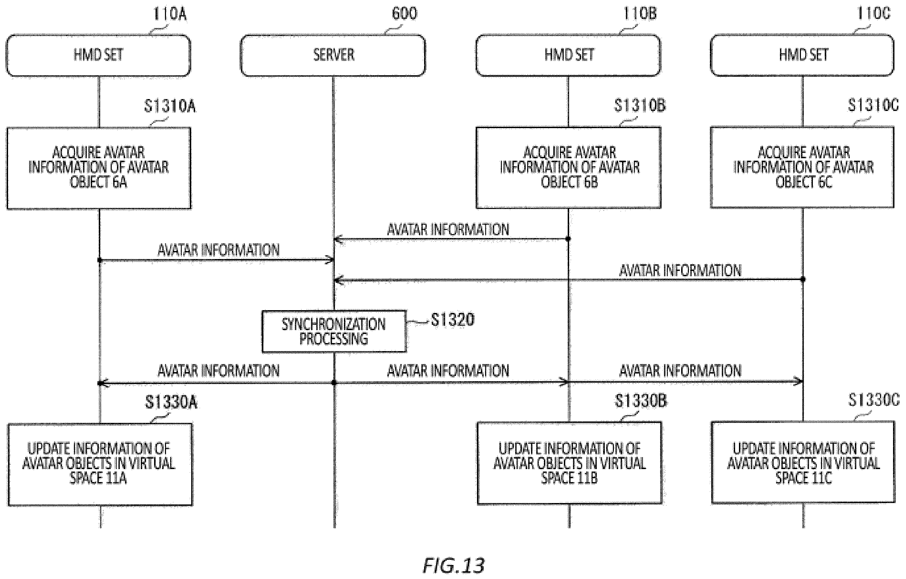

Fig. 13 is a sequence chart illustrating a part of processing executed in the HMD system 100 according to the present embodiment. Although the HMD set 110D is not illustrated in Fig. 13, the HMD set 110D operates similarly to the HMD sets 110A, 110B, and 110C. Also in following description, it is assumed that a reference numeral of each component related to the HMD set 110A is denoted by A, a reference numeral of each component related to the HMD set 110B is denoted by B, a reference numeral of each component related to the HMD set 110C is denoted by C, and a reference numeral of each component related to the HMD set 110D is denoted by D.

In step S1310A, the processor 210A in the HMD set 110A acquires avatar information for deciding an action of the avatar object 6A in the virtual space 11A. The avatar information includes, for example, information regarding an avatar, such as motion information, face tracking data, and audio data. The motion information includes information indicating temporal changes in a position and an inclination of the HMD 120A, information indicating a motion of a hand of the user 5A detected by a motion sensor 420A or the like, information indicating the operation of the user detected by the controller 300 or the like, or the like. Examples of the face tracking data include data specifying a position and a size of each part of a face of the user 5A. Examples of the face tracking data include data indicating a motion of each feature forming the face of the user 5A or line-of-sight data. Examples of the audio data include data indicating the audio of the user 5A acquired by the microphone 170A of the HMD 120A. The avatar information may include information specifying the avatar object 6A or the user 5A associated with the avatar object 6A, information specifying the virtual space 11A in which the avatar object 6A exists, or the like. Examples of the information specifying the avatar object 6A or the user 5A include the user ID. Examples of the information specifying the virtual space 11A in which the avatar object 6A exists include a room ID. The processor 210A transmits the avatar information acquired as described above to the server 600 via the network 2.

In step S1310B, a processor 210B in the HMD set 110B acquires avatar information for deciding an action of the avatar object 6B in the virtual space 11B, similarly to the processing in step S1310A, and transmits the avatar information to the server 600. Similarly, in step S1310C, a processor 210C in the HMD set 110C acquires avatar information for deciding an action of the avatar object 6C in the virtual space 11C, and transmits the avatar information to the server 600.

In step S1320, the server 600 temporarily stores the avatar information received from each of the HMD set 110A, the HMD set 110B, and the HMD set 110C. The server 600 integrates the avatar information of all users (in this example, the users 5A to 5C) associated with the common virtual space 11, based on the user ID, the room ID, or the like included in each avatar information. Then, the server 600 transmits the integrated avatar information to all the users associated with the virtual space 11 at a predetermined timing. Accordingly, synchronization processing is executed. With such synchronization processing, the HMD set 110A, the HMD set 110B, and the HMD set 110C can share the avatar information with each other at a substantially same timing.

Subsequently, based on the avatar information transmitted from the server 600 to each of the HMD sets 110A to 110C, each of the HMD sets 110A to 110C executes processing of steps S1330A to S1330C. The processing of step S1330A is equivalent to the processing of step S1180 in Fig. 11.

In step S1330A, the processor 210A in the HMD set 110A updates the information of the avatar objects 6B and 6C of the other users 5B and 5C in the virtual space 11A. Specifically, the processor 210A updates a position, an orientation, or the like of the avatar object 6B in the virtual space 11, based on the motion information included in the avatar information transmitted from the HMD set 110B. For example, the processor 210A updates the information (the position, the orientation, or the like) of the avatar object 6B included in the object information stored in the memory module 530. Similarly, the processor 210A updates the information (a position, an orientation, or the like) of the avatar object 6C in the virtual space 11, based on the motion information included in the avatar information transmitted from the HMD set 110C.

In step S1330B, the processor 210B in the HMD set 110B updates the information of the avatar objects 6A and 6C of the users 5A and 5C in the virtual space 11B, similarly to the processing in step S1330A. Similarly, in step S1330C, the processor 210C in the HMD set 110C updates the information of the avatar objects 6A and 6B of the users 5A and 5B in the virtual space 11C.

### (Detailed configuration of module)

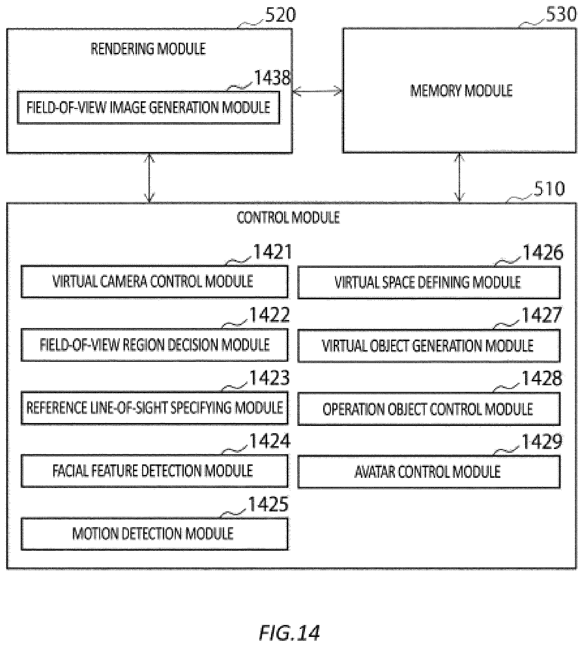

The module configuration of the computer 200 will be described in detail with reference to Fig. 14. Fig. 14 is a block diagram illustrating a detailed configuration of modules of the computer 200 according to an embodiment.

As illustrated in Fig. 14, the control module 510 includes a virtual camera control module 1421, a field-of-view region decision module 1422, a reference line-of-sight specifying module 1423, a facial feature detection module 1424, a motion detection module 1425, a virtual space defining module 1426, a virtual object generation module 1427, an operation object control module 1428, and an avatar control module 1429. The rendering module 520 includes a field-of-view image generation module 1438.

The virtual camera control module 1421 arranges the virtual camera 14 in the virtual space 11. The virtual camera control module 1421 controls an arrangement position of the virtual camera 14 in the virtual space 11 and an orientation (inclination) of the virtual camera 14. The field-of-view region decision module 1422 defines the field-of-view region 15 according to an orientation of the head of the user wearing the HMD 120 and the arrangement position of the virtual camera 14. The field-of-view image generation module 1438 generates the field-of-view image 17 to be displayed on the monitor 130, based on the decided field-of-view region 15.

The reference line-of-sight specifying module 1423 specify the line-of-sight of the user 5 based on a signal from the gaze sensor 140. The facial feature detection module 1424 detects the features (for example, the mouth, the eye, and the eyebrow) forming the face of the user 5 from the images of the face of the user 5 generated by the first camera 150 and the second camera 160. The motion detection module 1425 detects a motion (shape) of each feature detected by the facial feature detection module 1424.

The virtual space defining module 1426 defines the virtual space 11 in the HMD system 100 by generating the virtual space data representing the virtual space 11.

The virtual object generation module 1427 generates an object to be arranged in the virtual space 11. The object may include, for example, a landscape including a forest, a mountain, or the like arranged according to the progress of the game story, an animal, or the like.

The operation object control module 1428 arranges, in the virtual space 11, an operation object for receiving the operation of the user in the virtual space 11. The user operates the operation object to operate an object arranged in the virtual space 11, for example. In an aspect, the operation object may include, for example, a hand object equivalent to the hand of the user wearing the HMD 120, or the like. In an aspect, the operation object may be equivalent to the hand portion of the avatar object described below.

The avatar control module 1429 generates data for arranging, in the virtual space 11, the avatar object 6 of the user of another computer 200 connected via the network 2. In an aspect, the avatar control module 1429 generates data for arranging the avatar object 6 of the user 5 in the virtual space 11. In an aspect, the avatar control module 1429 generates the avatar object 6 imitating the user 5 based on an image including the user 5. In another aspect, the avatar control module 1429 generates data for arranging, in the virtual space 11, the avatar object 6 that is selected by the user 5 from among a plurality of types of avatar objects 6 (for example, the object imitating an animal or a deformed human object).

The avatar control module 1429 reflects the motion of the HMD 120 detected by the HMD sensor 410 on the avatar object 6. For example, the avatar control module 1429 senses that the HMD 120 is inclined, and generates data for arranging the avatar object 6 to be inclined. In an aspect, the avatar control module 1429 reflects the motion of the controller 300 in the avatar object 6. In another aspect, the avatar control module 1429 reflects the motion of the facial feature detected by the motion detection module 1425, on a face of the avatar object 6 arranged in the virtual space 11. That is, the avatar control module 1429 reflects a facial motion of the user 5A on the avatar object 6. As described above, the avatar object 6 is operated (in other words, moved) by the motion detected by the HMD sensor 410, the controller 300, or the motion detection module 1425.

### (Module configuration of server)

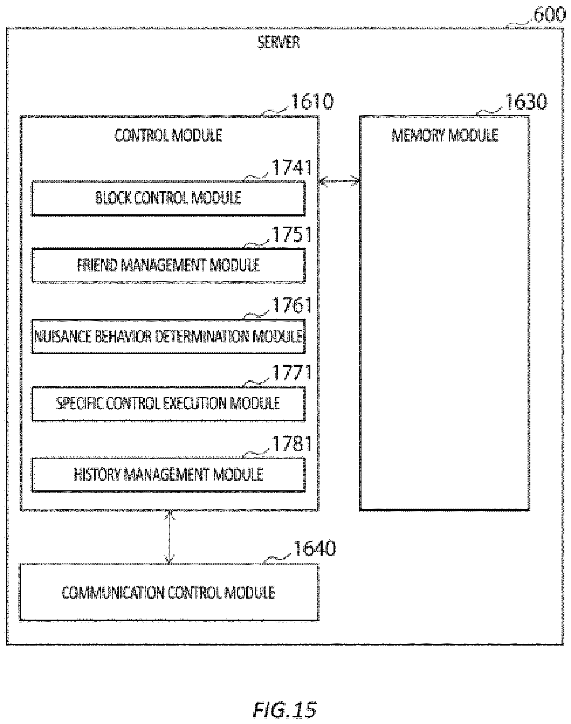

A module configuration of the server 600 will be described with reference to Fig. 15. Fig. 15 is a block diagram illustrating a configuration of modules of the server 600 according to an embodiment. As illustrated in Fig. 15, the server 600 includes a control module 1610, a memory module 1630, and a communication control module 1640. In an aspect, the control module 1610 is implemented by the processor 610. The memory module 1630 is implemented by the memory 620 or the storage 630. The communication control module 1640 is implemented by the communication interface 650.

The control module 1610 includes a real information acquisition module 1731.

The memory module 1630 holds data used by the computer 200 to provide the virtual space 11 to the user 5. In an aspect, the memory module 1630 holds spatial information, object information, and user information. The spatial information, the object information, and the user information of the memory module 1630 may include the spatial information, the object information, and the user information of the memory module 530 described above, respectively. Therefore, description thereof is omitted here.

The communication control module 1640 receives various types of information and various types of requests from each HMD set 110. As an example, the information that the communication control module 1640 receives from each HMD set 110 may include the spatial information, the object information, the user information, and the avatar information. The communication control module 1640 transmits various types of information and various types of requests to each HMD set 110. As an example, the information that the communication control module 1640 transmits to each HMD set 110 may include the spatial information, the object information, the user information, and the avatar information.

Processing in the server 600 is implemented by hardware and software executed by the processor 610. Such software may be stored in advance in a hard disk or another memory module 1630. The software may be stored in a CD-ROM or another computer-readable non-volatile data recording medium and distributed as a program product. Alternatively, the software may be provided as a program product that can be downloaded by an information provider connected to the Internet or another network. Such software is read from the data recording medium by an optical disk drive apparatus or another data reading apparatus, or downloaded from a predetermined computer via the communication control module 1640, and then temporarily stored in the memory module 1630. The software is read from the memory module 1630 by the processor 610 and stored in a form of an executable program in the RAM. The processor 610 executes the program.

Note that the module configuration of the computer 200 and the server 600 described above is merely an example. Each apparatus of the computer 200 and the server 600 may include at least a part of a module (in other words, a function) included in another apparatus. Furthermore, each apparatus such as the computer 200 and the server 600 may not be implemented by an integrated device, or may be implemented by, for example, a plurality of devices connected via a network or the like.

Furthermore, the present embodiment will be described assuming that the processor 210 of the computer 200 or the processor 610 of the server 600 executes a program stored in the HMD system 100 to perform each processing described above or below. However, at least a part of the processing described above or below and performed by the processor 210 may be executed by a processor different from the processor 210. Furthermore, at least a part of the processing described above or below and performed by the processor 610 may be executed by a processor different from the processor 610. In other words, the computer that executes the program in the present embodiment may be either the computer 200 or the server 600, or may be implemented by a combination of a plurality of apparatuses.

### (Processing according to present embodiment)

When detecting an utterance using the microphone 170, the control module 510 of the computer 200 specifies the computer 200 to which audio data corresponding to the utterance is to be transmitted, and transmits the audio data. Furthermore, when receiving the audio data from the computer 200 of another user, the control module 510 outputs audio corresponding to the audio data from the speaker 180. For example, in the state illustrated in Fig. 12B, the audio of the user 5A acquired by the microphone 170A is transmitted to the HMD 120B of the user 5B, and is output from the speaker 180B provided in the HMD 120B. On the other hand, the audio of the user 5B is transmitted to the HMD 120A of the user 5A, and is output from the speaker 180A provided in the HMD 120A. As described above, in the virtual space 11, the user 5A and the user 5B can have a dialogue with each other via the avatar object 6A and the avatar object 6B. The avatar control module 1429 (a character control unit) included in the control module 510 of each computer 200 causes the avatar object 6 (character) to appear in the virtual space 11 and enables a dialogue via the avatar object 6. Note that the dialogue between the user 5A and the user 5B in the virtual space 11 (in other words, a dialogue via the avatar object 6A and the avatar object 6B) may be performed by exchanging text messages or the like.

Hereinafter, a case where each HMD 120 provides the virtual space 11 to the user 5 as illustrated in Fig. 12A will be described. Furthermore, in the virtual space 11 illustrated in Fig. 12A, it is assumed that the avatar object 6B is performing nuisance behavior such as unidirectionally following around the avatar object 6A or trailing the avatar object 6A in a state of not being in contact with the avatar object 6A but maintaining a certain distance from the avatar object 6A. The nuisance behavior is so-called stoker behavior. It can be said that the avatar object 6A suffers from the stoker behavior in the virtual space 11.

In the present embodiment, regarding the virtual space 11, when the user 5A operating the avatar object 6A performs predetermined setting for the avatar object 6B, an identifiability of the avatar object 6A for the user 5B operating the avatar object 6B changes. The identifiability (in other words, an identification characteristic) can be a property (in other words, identifiable information) that can identify each avatar object 6 (in other words, each user 5), and specifically, includes appearance, an identification object, voice, a behavior, or the like.

### (identifiability)

The appearance can also be referred to as look, outward appearance, or the like. When an appearance of the avatar object 6A for the user 5B operating the avatar object 6B is changed based on the predetermined setting for the avatar object 6B performed by the user 5A operating the avatar object 6A, it becomes difficult for the user 5B operating the avatar object 6B to find the avatar object 6A in the virtual space 11. Therefore, it becomes difficult for the avatar object 6B to perform the nuisance behavior toward the avatar object 6A. In other words, the nuisance behavior can be suppressed. Furthermore, examples of the identification object include a handle display (hereinafter, a handle). In the present embodiment, in the virtual space 11, the handle related to each avatar object 6 can be displayed around the avatar object 6 (for example, above its head). The user 5 of each avatar object 6 can set the handle. Note that the handle may be same as the user ID. The handle can also be said to be an identification name that makes each user 5 (in other words, each avatar object 6) identifiable. Note that "identifiable" may mean that the user 5 can be uniquely specified, or may mean that there is a possibility that the user 5 cannot be uniquely specified. In other words, a same handle may be able to be attached or may not be attached to a plurality of users 5. Furthermore, the identification name may include a name associated with the avatar object 6 (character). Furthermore, the identification object is not limited to the handle, and may be a display related to a profile of the user 5 (in other words, the avatar object 6), a display related to a status, or the like. When the identification object (for example, the handle) related to the avatar object 6A for the user 5B is changed based on the predetermined setting for the avatar object 6B performed by the user 5A operating the avatar object 6A, there is an increased possibility that the user 5B considers that an avatar object that has been considered to be the avatar object 6A may not be the avatar object 6A, and stops the nuisance behavior toward the avatar object 6A. In other words, the nuisance behavior toward the avatar object 6A can be suppressed.

Next, a case where the voice as the identifiability changes will be described. When the voice of the avatar object 6A with respect to the user 5B changes, the user 5B hears the voice different from voice uttered by the user 5A. When the voice changes, voice quality (for example, pitch) may change, or a speaking style such as intonation or dialect may change. When the voice of the avatar object 6A (user 5A) changes based on the predetermined setting performed by the user 5A, for example, when a standard language changes to a Kansai language, there is an increased possibility that the user 5B feels unusual, considers that the avatar object that has been considered to be the avatar object 6A may not be the avatar object 6A, and stops the nuisance behavior toward the avatar object 6A. In other words, the nuisance behavior toward the avatar object 6A can be suppressed. Next, a case where the behavior as the identifiability changes will be described. The behavior can also be referred to as demeanor or the like. Furthermore, the behavior may also include a habit in action. When the behavior of the avatar object 6A with respect to the user 5B changes, the action of the avatar object 6A visually recognized by the user 5B is partially different from the action of the user 5A. As an example of the change in behavior, there is a case where, when the user 5A moves his/her right arm in a state of grasping the controller 300 for a right hand, a left arm of the avatar object 6A is controlled to move according to the motion. Furthermore, there is a case where the avatar object 6A is controlled to perform a predetermined action (for example, an action of running its fingers through its hair) at a predetermined frequency even though the user 5A does not perform the predetermined action with his/her hand grasping the controller 300. When the behavior of the avatar object 6A changes, for example, when the avatar object 6A that frequently used its right hand starts to use its left hand more, there is an increased possibility that the user 5B feels unusual, considers that the avatar object that has been considered to be the avatar object 6A may not be the avatar object 6A, and stops the nuisance behavior toward the avatar object 6A. In other words, the nuisance behavior toward the avatar object 6A can be suppressed. Hereinafter, in the present embodiment, a case where will be described in which the appearance and the handle as the identifiability of the avatar object 6A are changed based on the predetermined setting by the user 5A, but the identifiability changed based on the predetermined setting is not limited thereto.

### (Block setting)

The user 5A operating the avatar object 6A can perform block setting as the predetermined setting for the avatar object 6B. For example, the user 5A can operate the controller 300A to display a menu image on the monitor 130A, select "block setting" from the menu image, and input an operation of deciding the avatar object 6B as a block target. When "block setting" is selected, for example, the avatar objects 6 that exist within a predetermined range (or have existed within the predetermined range within a predetermined period) centered on a position of the avatar object 6A are displayed, and the avatar object 6B may be selectable therefrom. Furthermore, the avatar object 6B may be searched for and selected by selecting "block setting" and inputting the handle or the like of the avatar object 6B. Furthermore, if the avatar object 6A and the avatar object 6B have a friend relationship (described later), the user 5A may select "friend list" from the menu image, select the avatar object 6B from displayed friends, and apply the block setting to the avatar object 6B.

As illustrated in Fig. 13, the HMD set 110A (specifically, an avatar control module 1429A) acquires avatar information (step S1310A), and transmits the acquired avatar information to the server 600. In the present embodiment, when the user 5A performs the above-described block setting, the avatar control module 1429A transmits the avatar information including block information to the server 600. Note that the block information may be transmitted to the server 600 separately from the avatar information. The block information includes, for example, the ID of the user 5 who has performed the block setting and the ID of the user 5 of the avatar object 6 which is set as the block target.

The server 600 temporarily stores the received avatar information, executes the synchronization processing (step S1320), and transmits the avatar information to each HMD set 110, but when the avatar information received from the HMD set 110 includes the block information, sets the avatar information to be transmitted to the predetermined HMD set 110, as avatar information reflecting next display change processing (identifiability change processing).

### (Display change processing)

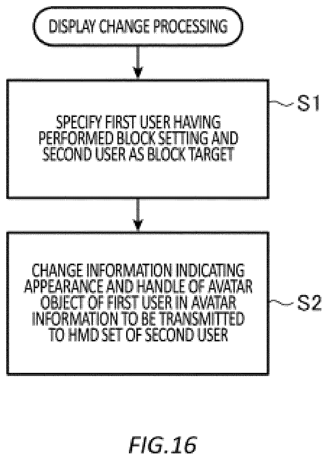

As illustrated in Fig. 15, the control module 1610 of the server 600 includes a block control module 1741 (a setting reflection unit). When determining that the avatar information received from the HMD set 110 includes the block information, the block control module 1741 executes display change processing. Fig. 16 is a flowchart illustrating a flow of the display change processing.

Based on the received block information, the block control module 1741 specifies a user having performed the block setting (referred to as a first user) and a user as the block target (referred to as a second user) (step S1).

Next, the block control module 1741 changes information (first information) indicating the appearance and the handle of the avatar object 6 of the first user in the avatar information transmitted to the HMD set 110 of the second user (step S2). Here, it is assumed that the block control module 1741 changes information indicating the appearance and the handle of the avatar object 6A of the user 5A in the avatar information transmitted to the HMD set 110B of the user 5B.

Regarding the appearance after the change according to step S2, the change in appearance may change the appearance of the avatar object 6 to another appearance with, for example, a different gender, physique, facial shape, race or species, or the like. For example, when the avatar object 6 of the first user has a female appearance, the appearance may be changed to a male appearance or an animal appearance such as a panda. Furthermore, the change in appearance may be, for example, a change in part of the current appearance or equipment of the avatar object 6. For example, a hairstyle, clothing, accessories, glasses, or the like may be changed. Note that changing the appearance may be referred to as changing a skin.

The change in the appearance of the avatar object 6 according to step S2 is preferably a change to such an extent that the same avatar object 6 cannot be specified before and after the change. For example, it is preferable to change the gender, the facial shape, or the like, to make a change to cover the face with a mask or the like, or the like.

Furthermore, the change in the handle according to step S2 is also preferably a change to such an extent that the same avatar object 6 cannot be specified before and after the change. For example, when the current gender set in the avatar object 6 is female, it is preferable to change the handle to a handle reminding of being male.

In the processing of step S2, the block control module 1741 may automatically select the changed appearance or the changed handle of the avatar object 6 of the first user. In other words, the block control module 1741 may automatically select the changed appearance or the changed handle of the avatar object 6 of the first user from among one or more candidates stored in the memory module 1630.

Furthermore, the changed appearance or the changed handle of the avatar object 6 of the first user may be selectable when the first user performs the block setting or the like. When selection by the first user is performed, the avatar control module 1429 of the first user transmits, to the server 600, the block information including the selected information. Then, in the processing in step S2 described above, the block control module 1741 sets the appearance and the handle of the avatar object 6 of the first user to those selected by the first user. Note that, when there is a plurality of second users which are set as the block target by the first user, the first user may be able to change and set, for each second user, the changed appearance or the changed handle of his/her own avatar object 6.

When executing the display change processing, the block control module 1741 transmits the avatar information reflecting the display change processing to the HMD set 110 of the second user. In the present embodiment, the block control module 1741 transmits the avatar information reflecting the display change processing to the HMD set 110B of the user 5B. Then, in step S1330B in Fig. 13, an avatar control module 1429B in the HMD set 110B displays the avatar object 6A with the changed appearance and the changed handle, based on the received avatar information (specifically, the first information). When the block setting is performed, the appearance of the avatar object 6A for the user 5B for which the block setting is performed is changed to an appearance different from the appearance before the change (in other words, the appearance for the user for which the block setting is not performed). Note that, in a case of changing the appearance (identifiability), it is sufficient that, as a result of the display based on the information received by the avatar control module 1429B, the appearance (identifiability) of the avatar object 6A becomes a different appearance. Furthermore, when the voice as the identifiability is changed, in the processing of step S2, the setting reflection unit sets the changed voice (voice quality, speaking style) of the avatar object 6 of the first user (user 5A). Then, after the setting, the HMD set 110 (avatar control module 1429B) of the second user (user 5B) sets, as the changed voice, the voice of the avatar object 6A output based on the acquisition of the audio data of the user 5A. Furthermore, when the behavior as the identifiability is changed, in the processing of step S2, the setting reflection unit sets the changed behavior (habit) of the avatar object 6 of the first user (user 5A). Then, after the setting, the HMD set 110 (avatar control module 1429B) of the second user (user 5B) controls the action of the avatar object 6A to partially differ from the action of the user 5A.

For example, in the case of changing the appearance, the block control module 1741 may perform changing the appearance, including processing of generating an avatar object having a changed appearance, or may perform changing the appearance without including the processing of generating the avatar object having the changed appearance. For example, in the memory module 530 of the HMD set 110 or the memory module 1630 of the server 600, object data indicating the avatar object 6A before the change and object data indicating the avatar object 6A after the change are prepared in advance, and the setting reflection unit may perform changing the appearance of the avatar object 6A for the user 5B by making the object data transmitted to the HMD set 110B of the user 5B different, based on the setting (for example, block setting) of the user 5A, or the like. Note that, here, the object data indicating the avatar object 6A before the change and the object data indicating the avatar object 6A after the change may be prepared by the user 5A (in other words, the user 5A registers).

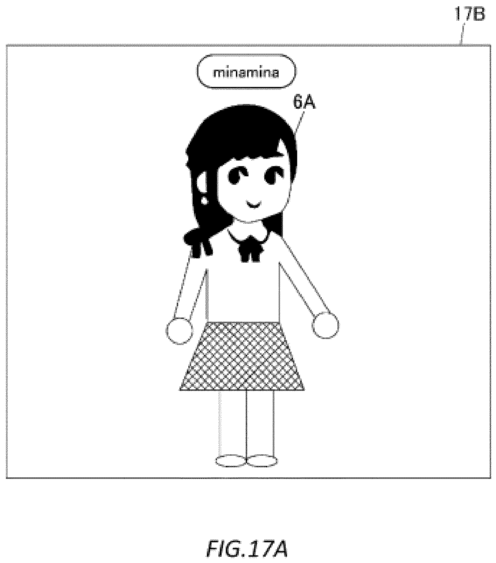

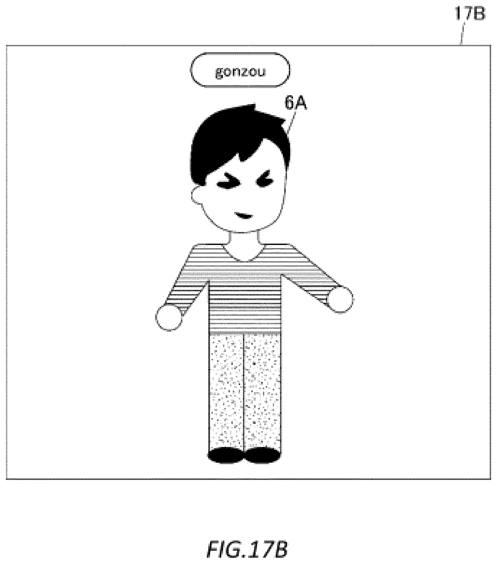

Fig. 17A illustrates an example of a field-of-view image 17B of the user 5B before the user 5A performs the block setting for the avatar object 6B. The avatar object 6A has the appearance of a female idol and uses "minamina" as its handle. Fig. 17B illustrates an example of the field-of-view image 17B of the user 5B after the user 5A applies the block setting to the avatar object 6B. The avatar object 6A has the appearance of a young man and uses "gonzou" as its handle.

The block control module 1741 performs control so as not to change the appearance and the handle of the avatar object 6A for the user 5 operating the avatar object 6 other than the avatar object 6B. In other words, the appearance and the handle of the avatar object 6A for the user 5B operating the avatar object 6B for which the block setting is performed by the user 5A are changed, but the appearance and the handle of the avatar object 6A for the user (for example, the user 5C) operating the avatar object (for example, the avatar object 6C) for which the block setting is not performed by the user 5A are not changed. The block control module 1741 transmits the avatar information reflecting the display change processing to the HMD set 110B of the user 5B operating the avatar object 6B for which the block setting is performed by the user 5A, but does not transmit the avatar information to the HMD set 110 of the user 5 operating the avatar object 6 for which the block setting is not performed by the user 5A.

In the present embodiment, the appearance and the handle of the avatar object 6 of the first user, who has performed the block setting, for the second user for which the block setting is performed are changed. In this case, additionally, the identifiability (appearance and handle) of the avatar object 6 of the second user for the first user may also be changed. In other words, the identifiability (appearance and handle) of the avatar object 6B of the user 5B for the user 5A may also be changed.

In this case, in the processing of step S2 in Fig. 16, the block control module 1741 (1) changes information indicating the appearance and the handle of the avatar object 6 of the first user in the avatar information to be transmitted to the HMD set 110 of the second user, and (2) changes information indicating the appearance and the handle of the avatar object 6 of the second user in the avatar information to be transmitted to the HMD set 110 of the first user. Then, the avatar control module 1429 of the second user displays the avatar object 6 of the first user with the changed appearance and the changed handle, based on the received avatar information, and the avatar control module 1429 of the first user displays the avatar object 6 of the second user with the changed appearance and the changed handle, based on the received avatar information. In other words, the appearance of the avatar object 6 of the first user provided to the second user is changed from the appearance before the block setting, and the appearance of the avatar object 6 of the second user provided to the first user is changed from the appearance before the block setting.

The user 5A (first user) operating the avatar object 6A may feel fear, antipathy, or the like toward the avatar object 6B (the avatar object 6 of the second user). In this regard, when the block setting is performed, the appearance and the handle of the avatar object 6B are changed so that it becomes difficult for the user 5A to recognize presence of the avatar object 6B after the block setting. Therefore, fear, antipathy, and the like toward the avatar object 6B can be reduced.

In the present embodiment, in the virtual space 11, the avatar objects 6 can be in the friend relationship with each other. For example, in the virtual space 11, when the user 5C operating the avatar object 6C sends a friend request to the avatar object 6A, and the user 5A of the avatar object 6A approves the request, the avatar object 6C and the avatar object 6A have the friend relationship. Note that the friend request and the approval can be made by each user 5 operating the controller 300. Furthermore, when the avatar object 6C and the avatar object 6A have the friend relationship, it may be referred to as the user 5C and the user 5A being friends.

In the present embodiment, when the avatar object 6C and the avatar object 6A have the friend relationship, at least one of the avatar control module 1429C or the avatar control module 1429A transmits, to the server 600, the avatar information including information (friend information) indicating that the avatar object 6C and the avatar object 6A are friends. The friend information includes at least the ID of the user 5 having sent the friend request and the ID of the user 5 having approved the request.

As illustrated in Fig. 15, the control module 1610 of the server 600 includes a friend management module (a friend management unit) 1751. The friend management module 1751 creates, for each avatar object 6, a list of the avatar objects 6 having the friend relationship with the avatar object 6 (specifically, a friend list), and stores the list in the memory module 1630. Based on reception of the friend information, the friend management module 1751 updates the corresponding friend list.

Here, for the sake of explanation, the appearance of the avatar object 6A illustrated in Fig. 17A is referred to as "true appearance", and the appearance of the avatar object 6A illustrated in Fig. 17B is referred to as "false appearance". In the present embodiment, when the user 5A performs the block setting for the avatar object 6B, the user 5B visually recognizes the false appearance of the avatar object 6A. Note that even if the avatar object 6A and the avatar object 6B have the friend relationship, the block setting is prioritized, and the user 5B visually recognizes the false appearance of the avatar object 6A.

Furthermore, in the present embodiment, the user 5 of the avatar object 6 for which the block setting is not performed by the user 5A visually recognizes the true appearance of the avatar object 6A, regardless of whether or not the user 5 is the user 5 of the avatar object 6 having the friend relationship with the avatar object 6A. Note that the user 5 of the avatar object 6 for which the block setting is not performed by the user 5A and which has the friend relationship with the avatar object 6A may visually recognize the true appearance of the avatar object 6A, but the user 5 of the avatar object 6 for which the block setting is not performed by the user 5A and which has no friend relationship with the avatar object 6A may visually recognize the false appearance of the avatar object 6A. In other words, for example, when the user 5A (avatar object 6A) sets the user 5C (avatar object 6C) as a friend, the control module 1610 may change the appearance of the avatar object 6A visually recognized by the user 5C from the false appearance before the friend setting to the true appearance. Further, in other words, each user 5 can register a plurality of types of appearances including an appearance shown to the users 5 set as special users 5 (for example, friends) by the user 5 and an appearance shown to the users 5 not set as the special users 5 by the user 5, and depending on the setting, the avatar object 6 having a predetermined appearance may be provided to another user 5.

In the present embodiment, an avatar object (here, the avatar object 6C) having the friend relationship with the avatar object 6A of the user 5A is relatively likely to act together with the avatar object 6A in the virtual space 11. In this case, the user 5B of the avatar object 6B for which the block setting is performed by the user 5A may indirectly discern a true identity of the avatar object 6A by viewing the avatar object 6C having the friend relationship with the avatar object 6A of the user 5A. To discern the true identity is to notice that the avatar object 6A (gonzou) having the appearance (false appearance) of Fig. 17B is actually the avatar object 6A (minamina) having the appearance (true appearance) of Fig. 17A. In other words, it is to notice that the appearance of the avatar object 6A has changed.

In this regard, in order to prevent such specification of the true identity through the avatar object 6 that is a friend, a following configuration may be adopted. In the processing of step S2 in Fig. 16, in the avatar information to be transmitted to the HMD set 110 of the second user (user 5B), the block control module 1741 changes (α) the information indicating the appearance and the handle of the avatar object 6 of the first user (user 5A) and changes (β) information indicating the appearances and the handles of all the avatar objects 6 (avatar objects 6C) having the friend relationship with the avatar object 6 of the first user (user 5A). From the friend list of the avatar object 6 of the first user (user 5A) stored in the memory module 1630, the block control module 1741 can specify the avatar object 6 having the friend relationship with the avatar object 6.

When the identifiability (appearance and handle) of the avatar object 6C having the friend relationship with the avatar object 6A is changed in addition to the appearance and the handle of the avatar object 6A, it becomes difficult for the user 5B to discern the true identity of the avatar object 6A through the avatar object 6C that is a friend. Therefore, it becomes more difficult for the avatar object 6B to perform the nuisance behavior toward the avatar object 6A.

According to the present embodiment, it becomes difficult for the user 5B operating the avatar object 6B to find the avatar object 6A in the virtual space 11, but the user 5 operating the avatar object 6 other than the avatar object 6B can find the avatar object 6A in the virtual space 11. Therefore, the user 5A operating the avatar object 6A can have a dialogue or the like with the user 5, operating the avatar object 6 other than the avatar object 6B, via the avatar object 6 while suppressing the avatar object 6B from performing the nuisance behavior toward the avatar object 6A. Accordingly, it is possible to provide the user 5 with a game space (that is, the virtual space 11) that has a reduced possibility of the user 5 feeling displeasure.

Furthermore, if the user 5A operating the avatar object 6A performs predetermined setting (for example, the block setting) for the avatar object 6B, and a restriction imposed when the predetermined setting is performed is direct and severe, for example, such that the user 5B operating the avatar object 6B is in a state of being unable to make the avatar object 6B appear in the virtual space 11, it is likely to provoke an emotion of the user 5B operating the avatar object 6B, increasing a possibility that the user 5B attempts the nuisance behavior in another form, for example. In the present embodiment, the restriction imposed when the predetermined setting is performed is to change the appearance of the avatar object 6A for the user 5B and allows the avatar object 6B to appear in the virtual space 11, and thus the restriction is not excessively strict, thereby reducing a possibility of provoking the emotion of the user 5 operating the avatar object 6B.

### (Modification)

In the present embodiment, when the user 5A performs the block setting for the avatar object 6B, the display change processing is executed, and the identifiability of the avatar object 6A for the user 5B operating the avatar object 6B changes, but instead of or in addition to the display change processing, another processing different from the display change processing may be executed. Hereinafter, a case will be described in which dummy arrangement processing is executed instead of the display change processing.

When the dummy arrangement processing is executed, at least one dummy avatar object 6A' (hereinafter, referred to as a dummy character 6A') corresponding to the avatar object 6A is arranged in the virtual space 11. The dummy can be referred to as a ghost, a duplicate, a substitute, a decoy, or fake (false character), or the like. The dummy character 6A' has a same appearance as the avatar object 6A. In other words, the dummy character 6A' is a copy of the avatar object 6A. Note that the dummy character 6A' may be different in appearance (similar in appearance) from that of the avatar object 6A. Being different in appearance (similar in appearance) refers to, for example, a case where the face is the same but a hairstyle, clothing, or color of clothes is different, or the like. Furthermore, when a plurality of dummy characters 6A' are arranged, the appearances of the dummy characters 6A' may be identical or may be different (for example, similar). In the present embodiment, when the plurality of dummy characters 6A' are arranged, the dummy characters 6A' are similar to each other, and for example, the color of clothes (a part of the appearance) is different.

When the dummy arrangement processing is executed and the dummy character 6A' appears, there is an increased possibility that the user 5B misunderstands that the dummy character 6A' is the avatar object 6A and the avatar object 6B trails the dummy character 6A', and as a result, it becomes difficult for the avatar object 6B to perform the nuisance behavior toward the avatar object 6A. Furthermore, when a plurality of dummy characters 6A' appear, a possibility that the user 5B operating the avatar object 6B feels unusual when viewing the dummy character 6A' can be reduced if respective appearances of the dummy characters 6A' are similar to each other, compared to if the appearances of the respective dummy characters 6A' are identical. In other words, it is possible to increase a possibility that the user 5B trails the dummy character 6A' without noticing that the user 5B is the dummy character 6A'.

Furthermore, the dummy character 6A' may have a same handle (identification object) as that of the avatar object 6A. In this case, there is a higher possibility that the dummy character 6A' is misunderstood as the avatar object 6A, and it becomes more difficult for the avatar object 6B to perform the nuisance behavior toward the avatar object 6A.

As will be described later, the dummy character 6A' does not act based on the operation of the user 5A. Furthermore, the dummy character 6A' cannot have a dialogue, unlike the avatar object 6A. Note that, although the dialogue cannot be performed in the present embodiment, for example, the dummy character 6A' may be controlled by Al or the like to be capable of responding. The dummy character 6A' has no entity (in other words, has no content).

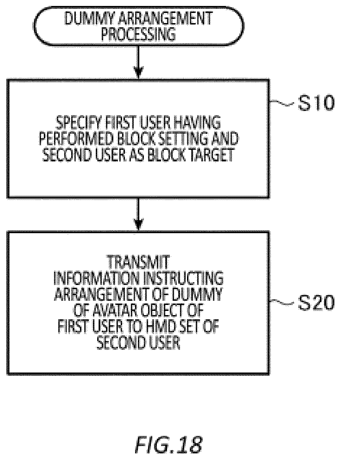

As illustrated in Fig. 13, the HMD set 110A (specifically, the avatar control module 1429A) acquires the avatar information (step S1310A), and transmits the acquired avatar information to the server 600. The server 600 temporarily stores the received avatar information, executes the synchronization processing (step S1320), and transmits the avatar information to each HMD set 110, but when the avatar information received from the HMD set 110 includes the block information, executes the dummy arrangement processing. Fig. 18 is a flowchart illustrating a flow of the dummy arrangement processing.

### (Dummy arrangement processing)

Based on the received block information, the block control module 1741 specifies a user having performed the block setting (first user) and a user as the block target (second user) (step S10).

Next, the block control module 1741 adds information (second information) instructing arrangement of at least one (in other words, one entity) dummy character 6A' of the avatar object 6 of the first user to the avatar information to be transmitted to the HMD set 110 of the second user (step S20). Note that, in the present embodiment, the second information is added to the avatar information, but the second information may be transmitted to the HMD set 110 of the second user separately from the avatar information. Here, it is assumed that the block control module 1741 transmits information (second information) instructing arrangement of three dummy characters 6A' of the avatar object 6A of the user 5A to the HMD set 110B of the user 5B.

When executing the dummy arrangement processing, the block control module 1741 transmits the avatar information reflecting the dummy arrangement processing to the HMD set 110 of the second user. In the present embodiment, the block control module 1741 transmits the avatar information reflecting the dummy arrangement processing to the HMD set 110B of the user 5B. In step S1330B of Fig. 13, the avatar control module 1429B in the HMD set 110B arranges the three dummy characters 6A' of the avatar object 6A in the virtual space 11B, based on the received avatar information. In other words, the block control module 1741 transmits, to the avatar control module 1429B, the information (second information) instructing the arrangement of the dummy characters 6A', and the avatar control module 1429B arranges the dummy characters 6A' in the virtual space 11B, based on the information.

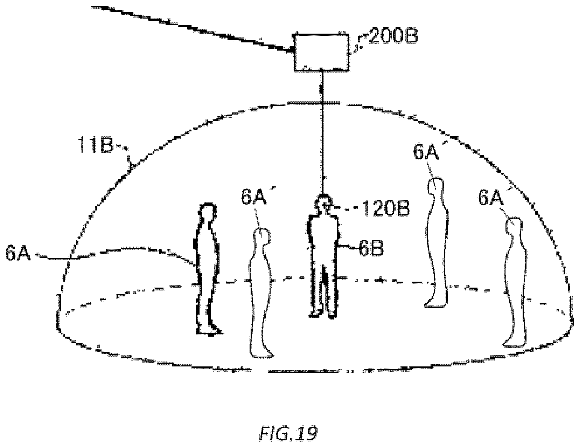

Fig. 19 illustrates an example of the virtual space 11B after the user 5A applies the block setting to the avatar object 6B. Separately from the avatar object 6A, three dummy characters 6A' appear in the virtual space 11B.

The block control module 1741 performs control such that the dummy character 6A' is not visually recognized by the user 5 operating the avatar object 6 other than the avatar object 6B. In other words, the user 5B of the avatar object 6B for which the block setting is performed visually recognizes the dummy character 6A' of the avatar object 6A, but the user (for example, the user 5C) operating the avatar object (for example, the avatar object 6C) for which the block setting is not performed does not visually recognize the dummy character 6A' of the avatar object 6A. The block control module 1741 transmits the avatar information reflecting the dummy arrangement processing to the HMD set 110B of the user 5B operating the avatar object 6B for which the block setting is performed by the user 5A, but does not transmit the avatar information to the HMD set 110 of the user 5 operating the avatar object 6 for which the block setting is not performed by the user 5A. In other words, for example, the dummy character 6A' is not arranged in the virtual space 11C.

In the present modification, the user 5 of the avatar object 6 for which the block setting is not performed by the user 5A does not visually recognize the dummy character 6A', regardless of whether or not the user 5 is the user 5 of the avatar object 6 having the friend relationship with the avatar object 6A. Note that the user 5 of the avatar object 6 for which the block setting is not performed by the user 5A and which has the friend relationship with the avatar object 6A may not visually recognize the dummy character 6A', but the user 5 of the avatar object 6 for which the block setting is not performed by the user 5A and which has no friend relationship with the avatar object 6A may visually recognize the dummy character 6A'. Furthermore, it is assumed that the dummy character 6A' is not visually recognized by the user 5A of the avatar object 6A for which the block setting is performed, but the dummy character 6A' may also be visually recognized by the user 5A.

The user 5A can operate the avatar object 6A. On the other hand, the user 5A cannot operate the dummy character 6A' of the avatar object 6A. The dummy character 6A' is not operated by the user, but acts based on a program and automatically moves around in the virtual space 11. The block control module 1741 controls the action of the dummy character 6A' in the virtual space 11. The block control module 1741 controls the dummy character 6A' to randomly move around in the virtual space 11. To randomly move around is not limited to constant movement, and may involve alternately repeating moving and stopping. Note that, when a plurality of dummy characters 6A' are arranged in the virtual space 11, the block control module 1741 preferably scatters the dummy characters 6A'.

The block control module 1741 transmits information instructing the action of the dummy character 6A' to at least the HMD set 110 (HMD set 110B) of the second user (user 5B). The avatar control module 1429B of the HMD set 110 (HMD set 110B) causes the dummy character 6A' to act, based on the received information.

The block control module 1741 may learn an action history of the avatar object 6A to create Al, and control the action of the dummy character 6A' in the virtual space 11 based on the AI. In this case, an action pattern of the dummy character 6A' is closer to an action pattern of the avatar object 6A. Therefore, it is more difficult to distinguish whether the avatar object is the avatar object 6A or the dummy character 6A'. Accordingly, it becomes more difficult for the avatar object 6B to perform the nuisance behavior toward the avatar object 6A.

It may be configured such that both the display change processing and the dummy arrangement processing are executed when the user 5A performs the block setting for the avatar object 6B. In this case, for example, control is performed such that at least one dummy character 6A' corresponding to the avatar object 6A before the change (that is, the true appearance) is arranged, and the appearance of the avatar object 6A for the user 5B operating the avatar object 6B is the changed appearance (that is, the false appearance). In this case, as it becomes difficult to find the avatar object 6A, a possibility of trailing the dummy character 6A' relatively increases, and it becomes more difficult for the avatar object 6B to perform the nuisance behavior toward the avatar object 6A. Note that both the display change processing and the dummy arrangement processing may be executed to perform control such that the appearance of the avatar object 6A for the user 5B operating the avatar object 6B is the changed appearance and at least one dummy character 6A' corresponding to the avatar object 6A having the changed appearance is arranged.

Furthermore, when the user 5A performs the block setting for the avatar object 6B, (only) the user 5B operating the avatar object 6B may not be able to visually recognize the avatar object 6A.

According to the present modification, there is an increased possibility that the user 5B operating the avatar object 6B misunderstands that the dummy character 6A' in the virtual space 11 is the avatar object 6A, and the avatar object 6B trails the dummy character 6A', and thus, it becomes difficult for the avatar object 6B to perform the nuisance behavior toward the avatar object 6A. Accordingly, it is possible to provide the user 5 with the game space (that is, the virtual space 11) that has the reduced possibility of the user 5 feeling displeasure.

### (Second embodiment)

Next, a second embodiment of the present invention will be described. Since the HMD system 100 according to the present embodiment basically has a same configuration as the HMD system 100 of the first embodiment, description of the same configuration as the HMD system 100 of the first embodiment will be omitted or simplified.

As illustrated in Fig. 15, the control module 1610 of the server 600 includes a nuisance behavior determination module 1761 (a determination unit and a sensing unit). The nuisance behavior determination module 1761 can determine a type of communication between the avatar objects 6 in the virtual space 11, and as one predetermined type of the types, there is a type in which a predetermined avatar object performs the nuisance behavior (so-called stoker behavior) toward another predetermined avatar object. Note that the type of communication determined by the nuisance behavior determination module 1761 may be only the type in which the predetermined avatar object performs the nuisance behavior toward the another predetermined avatar object. The nuisance behavior determination module 1761 can automatically determine whether or not the nuisance behavior is being performed. The nuisance behavior determination module 1761 can sense a behavior, which is regarded as the nuisance behavior, of the avatar object in the virtual space 11.

Hereinafter, a case where each HMD set 110 provides the virtual space 11 to the user 5 as illustrated in Fig. 12A will be described. Furthermore, a case where the avatar object 6B is performing the nuisance behavior toward the avatar object 6A in the virtual space 11 similarly to the first embodiment will be described.

As illustrated in Fig. 13, for example, the HMD set 110B (specifically, the avatar control module 1429B) acquires the avatar information (step S1310B), and transmits the acquired avatar information to the server 600. The avatar information transmitted by each HMD set 110 to the server 600 includes information (position information) indicating a position, in the virtual space 11, of the avatar object 6 operated by the user 5 of the HMD set 110.

Furthermore, in the present embodiment, a field-of-view image generation module 1438B of the HMD set 110B generates the field-of-view image 17B displayed on a monitor 130B, based on a field-of-view region 15B. The field-of-view image generation module 1438B transmits, to the server 600, information regarding the field-of-view of the user 5B. For example, the information regarding the field-of-view of the user 5B may be the field-of-view image 17B or may be information indicating an object displayed on an image (that is, the field-of-view image 17B) presented to the user 5B. Similarly, another HMD set 110 transmits, to the server 600, information regarding the field-of-view of the user 5 of the another HMD set 110. Hereinafter, the information regarding the field-of-view of the user 5 is referred to as field-of-view information.

### (Determination based on field-of-view information)

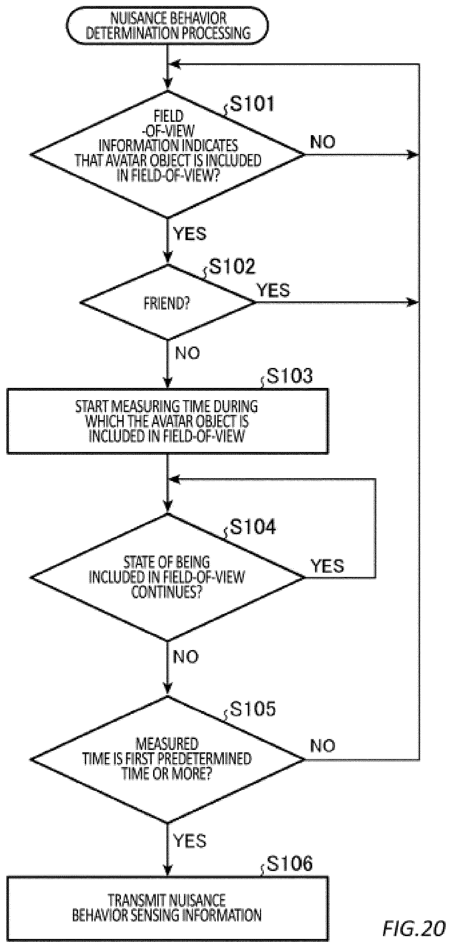

The nuisance behavior determination module 1761 performs nuisance behavior determination processing based on the field-of-view information received from the HMD set 110. Fig. 20 is a flowchart illustrating a flow of the nuisance behavior determination processing. In Fig. 20, the nuisance behavior determination processing based on the field-of-view information received from the HMD set 110B will be described.

The nuisance behavior determination module 1761 determines whether or not the field-of-view information received from the HMD set 110B indicates that the avatar object 6 is included in the field-of-view (step S101). If it is determined in step S101 that the field-of-view information does not indicate that the avatar object 6 is included in the field-of-view (step S101: NO), the nuisance behavior determination module 1761 repeats the processing of step S101.

If it is determined in step S101 that the field-of-view information indicates that the avatar object 6 is included in the field-of-view (step S101: YES), the nuisance behavior determination module 1761 determines whether or not the avatar object 6 is a friend of the avatar object 6B of the user 5B of the HMD set 110B (step S102). If it is determined in step S102 that the avatar object 6 is the friend of the avatar object 6B (step S102: YES), the processing returns to step S101. On the other hand, if it is determined in step S102 that the avatar object 6 is not the friend of the avatar object 6B (step S102: NO), the processing proceeds to step S103. Here, it is assumed that the avatar object 6A is included in the field-of-view information received from the HMD set 110B, and the avatar object 6A and the avatar object 6B are not friends.

The nuisance behavior determination module 1761 starts measuring a time during which the avatar object 6A is included in the field-of-view (in other words, captured in the field-of-view) (step S103).

Next, the nuisance behavior determination module 1761 determines whether or not a state where the avatar object 6A is included in the field-of-view continues, based on the field-of-view information received from the HMD set 110B (step S104). If it is determined in step S104 that the state where the avatar object 6A is included in the field-of-view continues (step S104: YES), the nuisance behavior determination module 1761 continues the time measurement and repeats the processing of step S104. On the other hand, if it is determined in step S104 that the state where the avatar object 6A is included in the field-of-view does not continue (step S104: NO), the nuisance behavior determination module 1761 ends the time measurement and determines whether or not the measured time is equal to or longer than a first predetermined time (step S105). The measured time can be said to be a time during which the avatar object 6A is captured in the field-of-view of the user 5B. The first predetermined time is, for example, one hour. Note that step S104 may be configured such that even if the user 5B shifts his/her line-of-sight from the avatar object 6A only for a relatively short time, it is not determined that the state where the avatar object 6A is included in the field-of-view does not continue (step S104: NO), and the time measurement is continued. In other words, when the user 5B shifts his/her line-of-sight from the avatar object 6A for a short time (for example, five seconds), and then turns his/her line-of-sight to the avatar object 6A again, the processing of step S104 may be continued, and the processing may not proceed to step S105.

If it is determined in step S105 that the measured time is less than the first predetermined time (step S105: NO), the nuisance behavior determination module 1761 does not determine that the type of communication of the avatar object 6B with the avatar object 6A is the type of performing the nuisance behavior (does not sense the behavior regarded as the nuisance behavior), and returns to the processing of step S101. On the other hand, if it is determined in step S105 that the measured time is equal to or longer than the first predetermined time (step S105: YES), the nuisance behavior determination module 1761 determines that the type of communication of the avatar object 6B with the avatar object 6A is the type of performing the nuisance behavior (in other words, recognizes the avatar object 6B as the avatar object 6 performing the nuisance behavior) (further, in other words, senses the behavior regarded as the nuisance behavior), and transmits nuisance behavior sensing information to a specific control execution module 1771 (step S106). The nuisance behavior sensing information includes at least the ID of the user (user 5B) of the avatar object (avatar object 6B) determined to be performing the nuisance behavior, and the ID of the user (user 5A) of the avatar object (avatar object 6A) determined to be suffering from the nuisance behavior.

Even if it is determined in step S104 that the state where the avatar object 6A is included in the field-of-view continues, when a state where the positions of both the avatar object 6A and the avatar object 6B are stationary continues for a certain time, the time measurement may be temporarily stopped, and when either the avatar object 6A or the avatar object 6B starts to move, the time measurement may be resumed. In other words, the first predetermined time may be configured not to include a predetermined time elapsed in the state where both the avatar object 6A and the avatar object 6B are stationary. When the avatar object 6B is not performing the nuisance behavior toward the avatar object 6A, and both the avatar object 6A and the avatar object 6B are stationary simply due to the user 5A of the avatar object 6A or the user 5B of the avatar object 6B leaving them unattended without performing any operation, if the time measurement related to step S104 is continued, there is a risk that it is determined that the avatar object 6B is performing the nuisance behavior toward the avatar object 6A. In this regard, a possibility of such determination can be reduced by not including a time during which both are stationary in the first predetermined time.

Furthermore, in step S105, the nuisance behavior determination module 1761 may change the first predetermined time according to an attribute of the avatar object 6A captured in the field-of-view. For example, when the avatar object 6A has an attribute that can attract the line-of-sight of the user 5 operating another avatar object 6, the first predetermined time may be set to be longer (for example, three hours). Examples of the attribute include having a relatively large number of friends, wearing an extremely rare item, and the like. When the first predetermined time is set to be long if the avatar object 6A has the attribute, it is possible to reduce a possibility of determining that the avatar object 6B, which is not performing the nuisance behavior toward the avatar object 6A and is chasing the avatar object 6A popular in the virtual space 11 with good intentions, is performing the nuisance behavior.

In the nuisance behavior determination processing illustrated in Fig. 20, it can be said that whether or not a length of the time during which the avatar object 6A is continuously captured in the field-of-view of the user 5B operating the avatar object 6B is equal to or greater than the first predetermined time is used as a determination condition of whether or not the avatar object 6B is performing the nuisance behavior.

### (Modification)

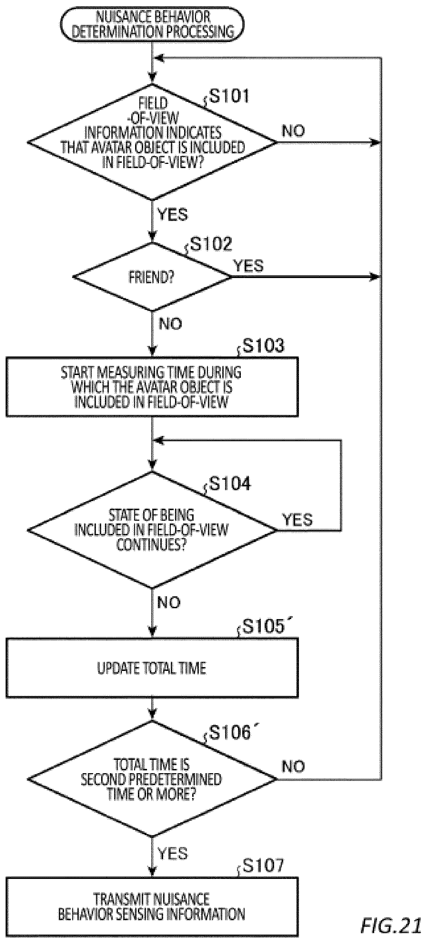

Step S105 and subsequent steps in Fig. 20 may be configured as follows. As illustrated in Fig. 21, the nuisance behavior determination module 1761 ends the time measurement and updates a stored value of a total time stored in the memory module 1630 (step S105'). The total time is a time obtained by summing (in other words, accumulating) a time during which a predetermined avatar object (avatar object 6A) is captured in the field-of-view of the user 5B operating another predetermined avatar object (avatar object 6B) in a predetermined period. The predetermined period may be, for example, one day or one week.

Next, the nuisance behavior determination module 1761 determines whether or not the total time stored in the memory module 1630 is equal to or longer than a second predetermined time (step S106'). When the predetermined period is one day, the second predetermined time is, for example, three hours. Note that similarly to the first predetermined time, the nuisance behavior determination module 1761 may change the second predetermined time according to the attribute of the avatar object 6 captured in the field-of-view.

If it is determined in step S106' that the total time is less than the second predetermined time (step S106': NO), the nuisance behavior determination module 1761 does not determine that the type of communication of the avatar object 6B with the avatar object 6A is the type of performing the nuisance behavior (does not sense the behavior regarded as the nuisance behavior), and returns to the processing of step S101. On the other hand, if it is determined in step S106' that the total time is equal to or longer than the second predetermined time (step S106': YES), the nuisance behavior determination module 1761 determines that the type of communication of the avatar object 6B with the avatar object 6A is the type of performing the nuisance behavior (senses the behavior regarded as the nuisance behavior), and transmits the nuisance behavior sensing information to the specific control execution module 1771 (step S107).

In the present modification, it can be said that whether or not the total time of the time during which the avatar object 6A is captured in the field-of-view of the user 5B operating the avatar object 6B in the predetermined period is equal to or longer than the second predetermined time is used as the determination condition of whether or not the avatar object 6B is performing the nuisance behavior.

Note that the predetermined period may be, for example, one week, and whether or not a number of days during which the time during which the avatar object 6A is captured in the field-of-view of the user 5B operating the avatar object 6B is equal to or longer than the predetermined time is equal to or greater than a predetermined number of days in the predetermined period may be used as the determination condition of whether or not the avatar object 6B is performing the nuisance behavior. In this case, when the number of days during which the time during which the avatar object 6A is captured in the field-of-view of the user 5B operating the avatar object 6B is equal to or longer than the predetermined time is equal to or greater than the predetermined number of days in the predetermined period, it is determined that the avatar object 6B is performing the nuisance behavior.

As described above, based on the time during which the avatar object 6A is captured in the field-of-view of the user 5B, a nuisance behavior determination unit may determine whether or not the nuisance behavior is being performed.

### (Specific control)

When receiving the nuisance behavior sensing information, the specific control execution module 1771 (a specific control execution unit) of the server 600 executes specific control. As the specific control, for example, there is control to notify the user 5A of the avatar object 6A determined to suffer from the nuisance behavior that the avatar object 6B is performing the nuisance behavior (or may be performing the nuisance behavior). In the notification, for example, the specific control execution module 1771 may transmit information regarding the notification to the control module 510A of the HMD set 110A, and based on the information, the control module 510A may cause the monitor 130A to display a display (that is, a notification screen) indicating that the avatar object 6B may be performing the nuisance behavior. In this case, it may be possible to perform the block setting from the notification screen. In other words, it may be possible for a predetermined operation related to the block setting to be received on the notification screen.

With the notification, the user 5A can notice that the avatar object 6B may be performing the nuisance behavior. Furthermore, it is possible to consider whether or not it is necessary to take measures, and to take the measures such as the block setting if necessary.

Furthermore, the specific control may be control of imposing a restriction on the user 5B operating the avatar object 6B. For example, the user 5B may be in a state of being unable to make the avatar object 6B, which is determined to be performing the nuisance behavior, appear in the virtual space 11. This control can be said to be control for banishing the avatar object 6B from the virtual space 11, or can be said to be control for prohibiting arrangement of the avatar object 6B in the virtual space 11. When the control is executed, the user 5B cannot make his/her own avatar object 6B appear in the virtual space 11. Therefore, the avatar object 6B is in a state of being unable to perform any nuisance behavior toward the avatar object 6A.

Furthermore, the specific control may be the display change processing described in the first embodiment. In this case, the specific control execution module 1771 instructs the block control module 1741 to change the identifiability of the avatar object 6A, based on reception of the nuisance behavior sensing information. In this case, the display change processing is executed without requiring reception of the block information based on the block setting of the user 5A. Furthermore, the specific control may be the dummy arrangement processing described in the first embodiment. In this case, the specific control execution module 1771 instructs the block control module 1741 to arrange at least one dummy character 6A' of the avatar object 6A, based on the reception of the nuisance behavior sensing information. In this case, the dummy arrangement processing is executed without requiring the reception of the block information based on the block setting of the user 5A.

According to the present embodiment, when it is determined that it is the type that the avatar object 6B performs the nuisance behavior toward the avatar object 6A (when the behavior regarded as the nuisance behavior is sensed), the specific control is automatically executed. When the specific control is executed based on the predetermined setting by the user 5, there is a possibility that the nuisance behavior is repeated and the user 5 feels unpleasant until the user 5 performs the predetermined setting. According to the present configuration, the specific control is automatically executed when the behavior regarded as the nuisance behavior is sensed, so that it is possible to reduce a frequency at which the user 5 feels unpleasant. Accordingly, it is possible to provide the user 5 with the game space (that is, the virtual space 11) that has the reduced possibility of the user 5 feeling displeasure. Furthermore, when the user 5 determines on his/her own whether or not the user 5 is being subjected to the nuisance behavior and takes measures when determining that the user 5 is being subjected to the nuisance behavior, a time required to take the measures increases a possibility that the user 5 feels unpleasant due to the nuisance behavior. On the other hand, according to the present embodiment, the specific control is automatically executed based on the sensing of the behavior regarded as the nuisance behavior. Therefore, it is possible to take the measures in a relatively short time, and it is possible to reduce the possibility that the user 5 feels unpleasant. Accordingly, it is possible to provide the user with the virtual space 11 that has the reduced possibility of the user 5 feeling displeasure.

### (Determination based on position information)

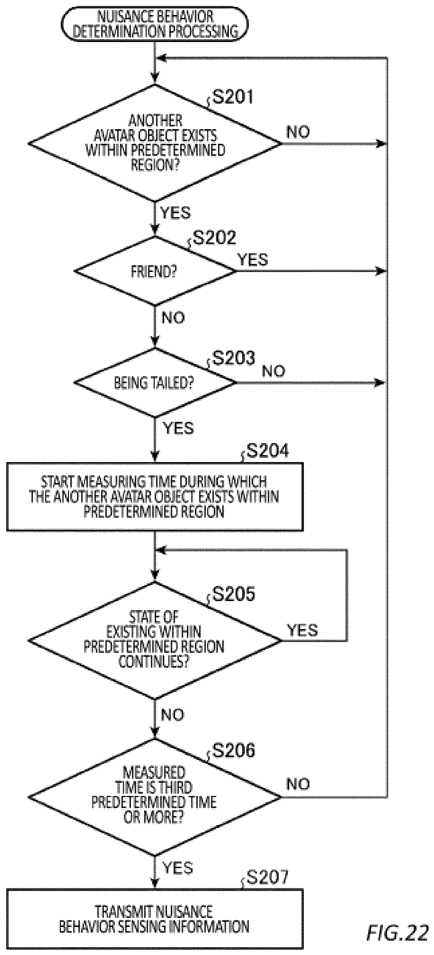

The nuisance behavior determination module 1761 may perform the nuisance behavior determination processing based on the position information received from the HMD set 110. Hereinafter, a specific description will be given. Fig. 22 is a flowchart illustrating a flow of the nuisance behavior determination processing.

The nuisance behavior determination module 1761 determines, for each avatar object 6 corresponding to the user 5 of each HMD set 110, whether or not another avatar object 6 exists within a predetermined region centered on the position of the avatar object 6 (reference avatar object 6) in the virtual space 11 (in other words, within a predetermined range), based on the received position information (step S201). The predetermined region is, for example, a region in which the reference avatar object 6 can be visually recognized in the virtual space 11.

If it is determined in step S201 that another avatar object 6 does not exist within the predetermined region centered on the position of the reference avatar object 6 (step S201: NO), the processing of step S201 is repeated. On the other hand, if it is determined in step S201 that another avatar object 6 exists within the predetermined region centered on the position of the reference avatar object 6 (step S201: YES), the nuisance behavior determination module 1761 determines whether or not the another avatar object 6 is a friend of the reference avatar object 6 (step S202). If it is determined in step S202 that the another avatar object 6 is the friend of the reference avatar object 6 (step S202: YES), the processing returns to step S201. On the other hand, if it is determined in step S202 that the another avatar object 6 is not the friend of the reference avatar object 6 (step S202: NO), the processing proceeds to step S203.

Next, the nuisance behavior determination module 1761 determines whether or not the reference avatar object 6 is being tailed by the another avatar object 6 (step S203). For example, the nuisance behavior determination module 1761 determines whether or not the reference avatar object 6 is being tailed, based on whether or not the another avatar object 6 moves in a same direction as the reference avatar object 6 after the reference avatar object 6 moves. If it is determined in step S203 that the reference avatar object 6 is being tailed by the another avatar object 6 (step S203: YES), the processing proceeds to step S204. On the other hand, if it is determined in step S203 that the reference avatar object 6 is not being tailed by the another avatar object 6 (step S203: NO), the processing returns to step S201.

Here, a case where (1) the avatar object 6B (or the avatar object 6A) exists within a predetermined region centered on the position of the avatar object 6A (or the avatar object 6B), (2) the avatar object 6A and the avatar object 6B are not friends, and (3) the avatar object 6B moves in a same direction as the avatar object 6A after the avatar object 6A moves, and the avatar object 6A does not move in a same direction as the avatar object 6B after the avatar object 6B moves is used as an example to describe the flow of the processing.

When the reference avatar object 6 is the avatar object 6A, it is determined in step S201 that the avatar object 6B exists within the predetermined region centered on the position of the avatar object 6A, it is determined in step S202 that the avatar object 6B is not a friend, it is determined in step S203 that the avatar object 6A is being tailed by the avatar object 6B, and the processing proceeds to step S204. On the other hand, when the reference avatar object 6 is the avatar object 6B, it is determined in step S201 that the avatar object 6A exists within the predetermined region centered on the position of the avatar object 6B, it is determined in step S202 that the avatar object 6A is not a friend, it is determined in step S203 that the avatar object 6B is not being tailed by the avatar object 6A, and the processing returns to step S201.

Hereinafter, a case where the reference avatar object 6 is the avatar object 6A will be described. The nuisance behavior determination module 1761 starts measuring a time during which the avatar object 6B exists within the predetermined region centered on the position of the avatar object 6A (step S204).

Next, the nuisance behavior determination module 1761 determines whether or not a state where the avatar object 6B exists within the predetermined region centered on the position of the avatar object 6A continues (step S205). If it is determined in step S205 that the state where the avatar object 6B exists within the predetermined region centered on the position of the avatar object 6A continues (step S205: YES), the nuisance behavior determination module 1761 continues the time measurement and repeats the processing of step S205. On the other hand, if it is determined in step S205 that the state where the avatar object 6B exists within the predetermined region centered on the position of the avatar object 6A does not continue (step S205: NO), the nuisance behavior determination module 1761 ends the time measurement and determines whether or not the measured time is equal to or longer than a third predetermined time (for example, one hour) (step S206).

If it is determined in step S206 that the measured time is less than the third predetermined time (step S206: NO), the nuisance behavior determination module 1761 does not determine that the type of communication of the avatar object 6B with the avatar object 6A is the type of performing the nuisance behavior (does not sense the behavior regarded as the nuisance behavior), and returns to the processing of step S201. On the other hand, if it is determined in step S206 that the measured time is equal to or longer than the third predetermined time (step S206: YES), the nuisance behavior determination module 1761 determines that the type of communication of the avatar object 6B with the avatar object 6A is the type of performing the nuisance behavior (senses the behavior regarded as the nuisance behavior), and transmits the nuisance behavior sensing information to the specific control execution module 1771 (step S207).

Note that in step S206, similarly to the first predetermined time, the nuisance behavior determination module 1761 may change the third predetermined time according to the attribute of the avatar object 6A. Furthermore, similarly to the case of the determination using the second predetermined time described above, the nuisance behavior determination module 1761 may determine whether or not the nuisance behavior is being performed, based on a total time in a predetermined period.

Furthermore, even if it is determined in step S205 that the state where the avatar object 6B exists within the predetermined region centered on the position of the avatar object 6A continues, when the state where the positions of both the avatar object 6A and the avatar object 6B are stationary continues for a certain time, the time measurement may be temporarily stopped, and when either the avatar object 6A or the avatar object 6B starts to move, the time measurement may be resumed. In other words, the third predetermined time may be configured not to include a predetermined time elapsed in the state where both the avatar object 6A and the avatar object 6B are stationary.

In the present example, it can be said that whether or not the time during which the avatar object 6B continuously exists within the predetermined region centered on the position of the avatar object 6A is equal to or longer than the third predetermined time is used as the determination condition of whether or not the avatar object 6B is performing the nuisance behavior. Based on the time during which the avatar object 6B exists within the predetermined range from the avatar object 6A, the nuisance behavior determination unit may determine whether or not the nuisance behavior is being performed.

### (Modification)

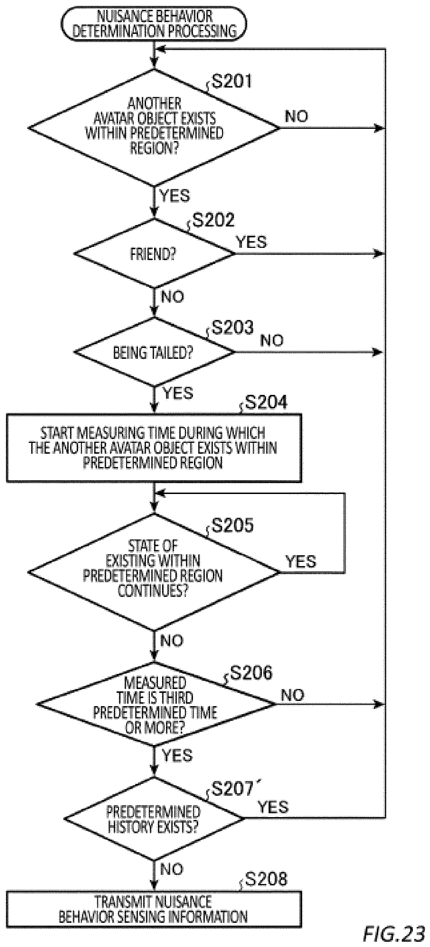

Note that if it is determined in step S206 that the measured time is equal to or longer than the third predetermined time (step S206: YES), a following configuration may be adopted. As illustrated in Fig. 23, the nuisance behavior determination module 1761 determines whether or not a predetermined history between the avatar object 6B (another avatar object 6) and the avatar object 6A (reference avatar object 6) exists within the third predetermined time (step S207'). The control module 1610 of the server 600 includes a history management module (a history management unit) 1781. The history management module 1781 stores, in the memory module 1630, history information including an action history of each avatar object 6 in the virtual space 11. The nuisance behavior determination module 1761 performs the processing of step S207' based on the history information.

The predetermined history may be a history in which the avatar object 6B and the avatar object 6A face each other, or may be a history in which the user 5B of the avatar object 6B and the user 5A of the avatar object 6A have a conversation. Note that the history of the conversation is not limited to a history in which audio data is exchanged bidirectionally, and may be a history in which audio data is transmitted unidirectionally from one to another.

If it is determined in step S207' that the predetermined history between the avatar object 6B and the avatar object 6A exists within the third predetermined time (step S207': YES), the nuisance behavior determination module 1761 does not determine that the type of communication of the avatar object 6B with the avatar object 6A is the type of performing the nuisance behavior (does not sense the behavior regarded as the nuisance behavior), and returns to the processing of step S201. On the other hand, if it is determined in step S207' that the predetermined history between the avatar object 6B and the avatar object 6A does not exist within the third predetermined time (step S207': NO), the nuisance behavior determination module 1761 determines that the type of communication of the avatar object 6B with the avatar object 6A is the type of performing the nuisance behavior (senses the behavior regarded as the nuisance behavior), and transmits the nuisance behavior sensing information to the specific control execution module 1771 (step S208).

When the predetermined history exists within the third predetermined time, there is a possibility that the user 5A of the avatar object 6A does not feel fear, antipathy, or the like toward the avatar object 6B. According to the present configuration, it is possible to reduce a possibility of determining that such an avatar object 6B is performing the nuisance behavior. In the present modification, it can be said that the condition of determining that the butter object 6B is performing the nuisance behavior is that the time during which the avatar object 6B continuously exists within the predetermined region centered on the position of the avatar object 6A is equal to or longer than the third predetermined time, and the predetermined history between the avatar object 6B and the avatar object 6A does not exist within the third predetermined time.

### (Determination based on pass-through count)

The nuisance behavior determination module 1761 may perform the nuisance behavior determination processing based on not only the field-of-view information or the position information but also based on pass-through count information. Hereinafter, a specific description will be given. In the present example, it is assumed that no contact (collision) between the avatar objects 6 is detected in the virtual space 11, and one avatar object 6 can pass through another avatar object 6.

Even when the avatar object 6B walks toward the avatar object 6A and the avatar object 6B and the avatar object 6A come into contact with each other, no contact between the avatar object 6B and the avatar object 6A is detected, and the avatar object 6B directly passes through the avatar object 6A. Compared to another avatar object 6 not performing the nuisance behavior, the avatar object 6B performing the nuisance behavior toward the avatar object 6A is likely to be walking around the avatar object 6A, and a number of times the avatar object 6B passes through the avatar object 6A is likely to be relatively large.

For each avatar object 6, The history management module 1781 stores, as the history information, the pass-through count information, which indicates the number of times the avatar object 6 has passed through another avatar object 6 in a predetermined period, in the memory module 1630. Note that, when there is a plurality of the other avatar objects 6, the pass-through count information can be stored for each of the other avatar objects 6. The predetermined period may be, for example, one day. The nuisance behavior determination module 1761 performs the nuisance behavior determination processing based on the pass-through count information.

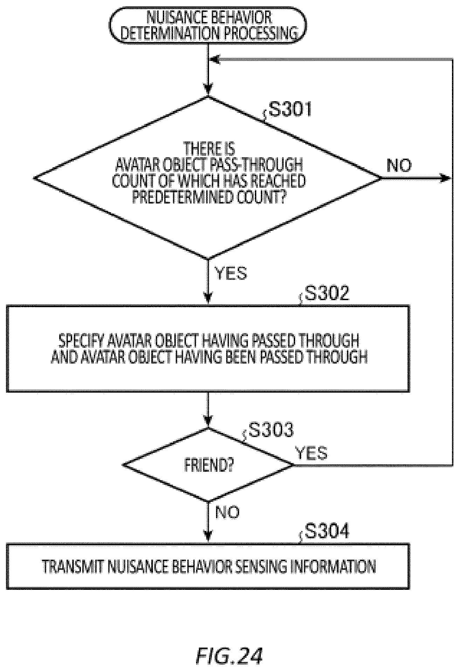

Fig. 24 is a flowchart illustrating a flow of the nuisance behavior determination processing. The nuisance behavior determination module 1761 determines whether or not there is the avatar object 6, the pass-through count of which within the predetermined period has reached a predetermined count (for example, ten times), based on the pass-through count information (step S301).

If it is determined in step S301 that there is no avatar object 6 the pass-through count of which has reached the predetermined count (for example, ten times) (step S301: NO), the processing of step S301 is repeated. On the other hand, if it is determined in step S301 that there is the avatar object 6 the pass-through count of which has reached the predetermined count (for example, ten times) (step S301: YES), the nuisance behavior determination module 1761 specifies the avatar object 6 that has passed through (here, the avatar object 6B) and the avatar object 6 that has been passed through (here, the avatar object 6A) (step S302).

Next, the nuisance behavior determination module 1761 determines whether or not the avatar objects specified in step S302, that is, the avatar object 6B and the avatar object 6A are friends (step S303). In a case where it is determined in step S303 that the avatar object 6B and the avatar object 6A are friends (step S303: YES), the processing returns to step S301. On the other hand, if it is determined in step S303 that the avatar object 6B and the avatar object 6A are not friends (step S303: NO), the nuisance behavior determination module 1761 determines that the avatar object 6B is performing the nuisance behavior toward the avatar object 6A (senses the behavior regarded as the nuisance behavior), and transmits the nuisance behavior sensing information to the specific control execution module 1771 (step S304).

In the present example, it can be said that whether or not the number of times the avatar object 6B has passed through the avatar object 6A has reached the predetermined count in the predetermined period is used as the determination condition of whether or not the avatar object 6B is performing the nuisance behavior. Note that the predetermined period may be set to, for example, one week, and whether or not a number of days within one week in which the avatar object 6B has passed through the avatar object 6A a predetermined count of times or more is equal to or greater than a predetermined number of days may be used as the determination condition of whether or not the avatar object 6B is performing the nuisance behavior. In this case, when the number of days within the predetermined period in which the avatar object 6B has passed through the avatar object 6A the predetermined count of times or more is equal to or greater than the predetermined number of days, it is determined that the avatar object 6B is performing the nuisance behavior.

Note that the present invention is not limited to the above-described embodiment, and various modifications can be made without departing from the gist thereof. In the present invention, it is possible to freely combine each component, to modify an arbitrary component, or to omit an arbitrary component within the scope of the invention. Furthermore, the flow of the processing described in the present specification is merely an example, and the order and configuration of each processing may vary. Furthermore, processing such as various types of determination processing illustrated in the flowcharts may not exist. In other words, the flow of the processing, specific determination processing, or the like may be different from those exemplified in the present specification.

### (Supplementary note)

The matters described in the above-described embodiment can also be described as following supplementary notes.

### (Supplementary note 1)

A program for causing a computer to function as a setting reflection unit (for example, the block control module 1741) which changes, for a virtual space which allows a character corresponding to a user to appear, an identifiability of a first character for a user operating a second character without changing the identifiability of the first character for a user operating a character other than the second character, based on predetermined setting which is performed for the second character by a user operating the first character.

According to such a configuration, the identifiability of the first character changes based on the predetermined setting, so that it becomes difficult for the user operating the second character to specify the first character in the virtual space. On the other hand, the user operating the character other than the second character can specify the first character in the virtual space. Therefore, the user operating the first character can suppress the second character from performing the nuisance behavior toward the first character. Furthermore, the user operating the first character can attempt communication or the like with the user operating the character other than the second character, via the characters in the virtual space. Accordingly, it is possible to provide the user with the virtual space that has a reduced possibility of the user feeling displeasure.

### (Supplementary note 2)

The program according to supplementary note 1, in which the identifiability is an appearance.

According to such a configuration, the appearance of the first character changes based on the predetermined setting, so that it becomes difficult for the user operating the second character to find the first character in the virtual space. Accordingly, it becomes difficult for the second character to perform the nuisance behavior toward the first character, and it is possible to reduce the possibility that the user operating the first character feels displeasure.

### (Supplementary note 3)

The program according to supplementary note 1 or 2, in which the identifiability is an identification object related to the first character, which is displayed together with the first character.

According to such a configuration, the identification object related to the first character changes based on the predetermined setting, so that it becomes more difficult for the user operating the second character to specify the first character in the virtual space. Accordingly, it becomes difficult for the second character to perform the nuisance behavior toward the first character, and it is possible to reduce the possibility that the user operating the first character feels displeasure.

### (Supplementary note 4)

The program according to supplementary note 1 or 2, in which the setting reflection unit changes an appearance of the second character for the user operating the first character, based on the predetermined setting.

According to such a configuration, it becomes difficult for the user operating the first character to recognize the presence of the second character in the virtual space. Therefore, it is possible to reduce fear, antipathy, or the like that the user operating the first character feels toward the second character.

### (Supplementary note 5)

The program according to supplementary note 1 or 2, in which the setting reflection unit changes an appearance of a friend character of the first character for the user operating the second character, based on the predetermined setting.

According to such a configuration, it is possible to reduce the possibility that the user operating the second character discerns the true identity of the first character via the friend of the first character in the virtual space. To discern the true identity means to notice that the identifiability of the first character has changed. Accordingly, it becomes more difficult for the second character to perform the nuisance behavior toward the first character, and it is possible to reduce the possibility that the user operating the first character feels displeasure.

### (Supplementary note 6)

An information processing system including a setting reflection unit (for example, the block control module 1741) which changes, for a virtual space which allows a character corresponding to a user to appear, an identifiability of a first character for a user operating a second character without changing the identifiability of the first character for a user operating a character other than the second character, based on predetermined setting which is performed for the second character by a user operating the first character.

According to such a configuration, functions and effects similar to those of the program according to supplementary note 1 can be obtained.

### (Supplementary note 7)

A program causing a computer to function as a setting reflection unit (for example, the block control module 1741) which causes, for a virtual space which allows a character corresponding to a user to appear, at least one dummy character, which is a dummy of a first character, to appear in the virtual space, based on predetermined setting which is performed for a second character by a user operating the first character.

According to such a configuration, the dummy character appears based on the predetermined setting, and thus there is an increased possibility that the user operating the second character misunderstands that the dummy character is the first character and the second character trails the dummy character. Therefore, it becomes difficult for the second character to perform the nuisance behavior toward the first character. Accordingly, it is possible to provide the user with the virtual space that has the reduced possibility of the user feeling displeasure.

### (Supplementary note 8)

The program according to supplementary note 7, in which the setting reflection unit causes a plurality of dummy characters, including the dummy character, having different appearances to appear in the virtual space, based on the predetermined setting.

According to such a configuration, a possibility that the user operating the second character feels unusual by viewing the dummy character can be reduced as compared with a case where the appearances of the plurality of dummy characters are all identical. Therefore, it is possible to increase a possibility that the second character trails the dummy character without noticing that the user is the dummy character. Accordingly, it is possible to reduce the possibility that the user operating the first character feels displeasure.

### (Supplementary note 9)

The program according to supplementary note 7 or 8, in which the setting reflection unit changes an identifiability of the first character for a user operating the second character, based on the predetermined setting.

According to such a configuration, the identifiability of the first character changes, and thus as it becomes difficult to specify the first character in the virtual space, a possibility of trailing the dummy character relatively increases. Therefore, it becomes more difficult for the second character to perform the nuisance behavior toward the first character, and it is possible to reduce the possibility that the user operating the first character feels displeasure.

### (Supplementary note 10)

An information processing system including a setting reflection unit (for example, the block control module 1741) which causes, for a virtual space which allows a character corresponding to a user to appear, at least one dummy character, which is a dummy of a first character, to appear in the virtual space, based on predetermined setting which is performed for a second character by a user operating the first character.

According to such a configuration, functions and effects similar to those of the program according to supplementary note 7 can be obtained.

### (Supplementary note 11)

A program for causing a computer to function as: a sensing unit (for example, the nuisance behavior determination module 1761) which is capable of sensing, in a virtual space which allows a character corresponding to each of a plurality of users to appear, a behavior, which is regarded as a nuisance behavior, of a character; and a specific control execution unit (for example, the specific control execution module 1771) which executes specific control based on sensing of the behavior regarded as the nuisance behavior. For example, when the user determines on his/her own whether or not the user is being subjected to the nuisance behavior and takes measures when determining that the user is being subjected to the nuisance behavior, a time required to take the measures increases the possibility that the user feels unpleasant due to the nuisance behavior. On the other hand, according to the present configuration, the specific control is automatically executed based on the sensing of the behavior regarded as the nuisance behavior. Therefore, it is possible to take the measures in a relatively short time, and it is possible to reduce the possibility that the user feels unpleasant. Accordingly, it is possible to provide the user with the virtual space that has the reduced possibility of the user feeling displeasure.

### (Supplementary note 12)

The program according to supplementary note 11, in which the specific control execution unit performs, as the specific control, a notification, to a user operating a first character, that a second character is performing the nuisance behavior, based on sensing of a behavior, which is regarded as the nuisance behavior, of the second character for the first character.

According to such a configuration, the user operating the first character can notice that the second character is performing the nuisance behavior, and can take measures immediately.

### (Supplementary note 13)

The program according to supplementary note 11 or 12, in which the sensing unit senses the behavior regarded as the nuisance behavior, based on a time during which a user captures a certain character in his/her field-of-view.

According to such a configuration, the behavior of the user who captures the certain character in his/her field-of-view for a relatively long time can be considered as the behavior regarded as the nuisance behavior.

### (Supplementary note 14)

An information processing system including: a sensing unit which is capable of sensing, in a virtual space which allows a character corresponding to each of a plurality of users to appear, a behavior, which is regarded as a nuisance behavior, of a character; and a specific control execution unit (for example, the specific control execution module 1771) which executes specific control based on sensing of the behavior regarded as the nuisance behavior.

According to such a configuration, functions and effects similar to those of the program according to supplementary note 11 can be obtained.

### EXPLANATION OF REFERENCES

5: user; 6: avatar object; 11: virtual space; 100: HMD system; 110: HMD set; 120: HMD; 130: monitor; 200: computer; 210: processor; 220: memory; 230: storage; 240: input/output interface; 250: communication interface; 300: controller; 410: HMD sensor; 420: motion sensor; 510: control module; 520: rendering module; 530: memory module; 540: communication control module; 600: server; 610: processor; 620: memory; 630: storage; 640: input/output interface; 650: communication interface; 700: external device; 1421: virtual camera control module; 1422: field-of-view region decision module; 1423: reference line-of-sight specifying module; 1424: facial feature detection module; 1425: motion detection module; 1426: virtual space defining module; 1427: virtual object generation module; 1428: operation object control module; 1429: avatar control module; 1438: field-of-view image generation module; 1610: control module; 1630: memory module; 1640: communication control module; 1741: block control module; 1751: friend management module; 1761: nuisance behavior determination module; 1771: specific control execution module; and 1781: history management module.

## Claims

1. A program for causing a computer to function as
a setting reflection unit which changes, for a virtual space which allows a character corresponding to a user to appear, an identifiability of a first character for a user operating a second character without changing the identifiability of the first character for a user operating a character other than the second character, based on predetermined setting which is performed for the second character by a user operating the first character.

2. The program according to claim 1, wherein
the identifiability is an appearance.

3. The program according to claim 1 or 2, wherein
the identifiability is an identification object related to the first character, which is displayed together with the first character.

4. The program according to claim 1 or 2, wherein
the setting reflection unit changes an appearance of the second character for the user operating the first character, based on the predetermined setting.

5. The program according to claim 1 or 2, wherein
the setting reflection unit changes an appearance of a friend character of the first character for the user operating the second character, based on the predetermined setting.

6. A program for causing a computer to function as
a setting reflection unit which causes, for a virtual space which allows a character corresponding to a user to appear, at least one dummy character, which is a dummy of a first character, to appear in the virtual space, based on predetermined setting which is performed for a second character by a user operating the first character.

7. The program according to claim 6, wherein
the setting reflection unit causes a plurality of dummy characters, including the dummy character, having different appearances to appear in the virtual space, based on the predetermined setting.

8. The program according to claim 6 or 7, wherein
the setting reflection unit changes an identifiability of the first character for a user operating the second character, based on the predetermined setting.

9. A program for causing a computer to function as:
a sensing unit which is capable of sensing, in a virtual space which allows a character corresponding to each of a plurality of users to appear, a behavior, which is regarded as a nuisance behavior, of a character; and
a specific control execution unit which executes specific control based on sensing of the behavior regarded as the nuisance behavior.

10. The program according to claim 9, wherein the specific control execution unit performs, as the specific control, a notification, to a user operating a first character, that a second character is performing the nuisance behavior, based on sensing of a behavior, which is regarded as the nuisance behavior, of the second character for the first character.

11. The program according to claim 9 or 10, wherein
the sensing unit senses the behavior regarded as the nuisance behavior, based on a time during which a user captures a certain character in his/her field-of-view.

12. An information processing system including a setting reflection unit which changes, for a virtual space which allows a character corresponding to a user to appear, an identifiability of a first character for a user operating a second character without changing the identifiability of the first character for a user operating a character other than the second character, based on predetermined setting which is performed for the second character by a user operating the first character.

13. An information processing system including a setting reflection unit which causes, for a virtual space which allows a character corresponding to a user to appear, at least one dummy character, which is a dummy of a first character, to appear in the virtual space, based on predetermined setting which is performed for a second character by a user operating the first character.

14. An information processing system including:
a sensing unit which is capable of sensing, in a virtual space which allows a character corresponding to each of a plurality of users to appear, a behavior, which is regarded as a nuisance behavior, of a character; and
a specific control execution unit which executes specific control based on sensing of the behavior regarded as the nuisance behavior.
